# EUROPEAN PATENT SPECIFICATION

(11) **EP 4 250 039 B1**
(45) Date of publication and mention of the grant of the patent: **04.03.2026**
(21) Application number: 23152032.1
(22) Date of filing: 17.01.2023
(51) Int. Cl.: G05D 1/00

(54) **DRIVING CONTROL APPARATUS FOR VEHICLE**
ANTRIEBSSTEUERUNGSVORRICHTUNG FÜR EIN FAHRZEUG
APPAREIL DE COMMANDE DE CONDUITE POUR VÉHICULE

(30) Priority: 22.03.2022 JP 2022045599
(43) Date of publication of application: 27.09.2023
(73) Proprietor: Suzuki Motor Corporation, Hamamatsu-shi, Shizuoka 432-8611 (JP)
(72) Inventor: SATO, Katsuhiko, Hamamatsu-shi, Shizuoka, 432-8611 (JP)
(74) Representative: Haseltine Lake Kempner LLP

(56) References cited:
- JP-A- 2020 164 038
- JP-A- 2021 123 254
- JP-B2- 6 819 177
- US-A1- 2021 024 058

## Description

### [Technical Field]

The present invention relates to a driving control apparatus for a vehicle, and more particularly, relates to a risk mitigation function for a vehicle being driven automatically by remote monitoring and control.

### [Background Art]

The development of technology for driverless vehicles driving under specific conditions by an automated operation device of the remote monitoring and control type is progressing. A remote-type automated driving system is configured to monitor, at a remote-control base station, the driving of a vehicle by an automated operation device provided with an inter-vehicle distance control system (ACCS) and a continuous automated steering system, for example, and to take control of the vehicle if necessary. In such a remote-type automated driving system, in the case of conditions in which the continuation of remote monitoring and control has become difficult for some reason while a vehicle is being driven by the automated operation device, it is necessary to respond with a risk mitigation function (RMF) of the automated operation device installed in the vehicle.

For example, Patent Literature 1 discloses, in a case in which an abnormality has occurred in a vehicle during automated driving, searching for a refuge location and calculating a guide path to the refuge location, and controlling the vehicle by automated steering to travel along the guide path. A space in which the vehicle can be parked, such as vacant site or the parking lot of a commercial facility, for example, is set as a refuge location.

A vehicle control system is disclosed by Patent Literature 2.

### [Citation List]

### [Patent Literature]

[Patent Literature 1] JP 2019-152963 A
[Patent Literature 2] JP 2020-164038 A

### [Summary of Invention]

### [Problem to be Solved by the Invention]

However, the case of the RMF being activated in the vicinity of an intersection carries the risk of disturbing traffic flow or contact or collision with others in traffic while guiding the vehicle to the refuge location, such as by encountering others in traffic at the intersection.

The present invention has been devised in light of circumstances as above, and an object thereof is to lower the risk of disturbance of traffic flow or contact or collision with others in traffic at an intersection when the risk mitigation function is activated.

### [Means for Solving the Problem]

The invention is defined by the appended independent claims. Some optional features are defined by the dependent claims.

### [Advantageous Effect of Invention]

A driving control apparatus for a vehicle according to the present invention can lower the risk of disturbing traffic flow or contact or collision with others in traffic at an intersection when the risk mitigation function is activated in the vicinity of the intersection.

### [Brief Description of Drawings]

[Figure 1] Figure 1 is a schematic diagram illustrating a driving control system for a vehicle in an embodiment of the present invention.
[Figure 2] Figure 2 is a schematic plan view illustrating an external sensor group of a vehicle.
[Figure 3] Figure 3 is a block diagram illustrating a driving control system for a vehicle.
[Figure 4] Figures 4(a) and 4(b) are diagrams explaining the relationship between a stopping location of a vehicle and others in traffic around an intersection when making a right turn.
[Figure 5] Figures 5(a) and 5(b) are diagrams explaining the relationship between a stopping location of a vehicle and others in traffic around an intersection when making a left turn.
[Figure 6] Figures 6(a) and 6(b) are diagrams explaining the relationship between a stopping location of a vehicle and others in traffic around an intersection when going straight.
[Figure 7] Figures 7(a) and 7(b) are diagrams illustrating a plurality of target stopping location candidates set for RMF use.
[Figure 8] Figures 8(a) and 8(b) are diagrams illustrating a plurality of target stopping location candidates set for RMF.
[Figure 9] Figure 9 is a diagram explaining the selection of a target stopping location at a T-junction.
[Figure 10] Figure 10 is a diagram explaining the selection of a target stopping location at a crossroads.
[Figure 11] Figure 11 is a flowchart explaining the flow of RMF operation.

### [Mode for Carrying Out the Invention]

Hereinafter, an embodiment of the present invention will be described in detail by referring to the drawings. A driving control system for a vehicle 100 according to the present embodiment is configured to be capable of executing automated driving corresponding to the Society of Automotive Engineers (SAE) Level 4, in which all driving operations in the operational design domain (ODD) are performed. Also, the driving control system for the vehicle 100 is a remote-type automated driving system capable of automated driving by remote monitoring and control, and taxis, rental cars, and other service cars that provide unmanned automated transportation services are anticipated as the vehicle 100.

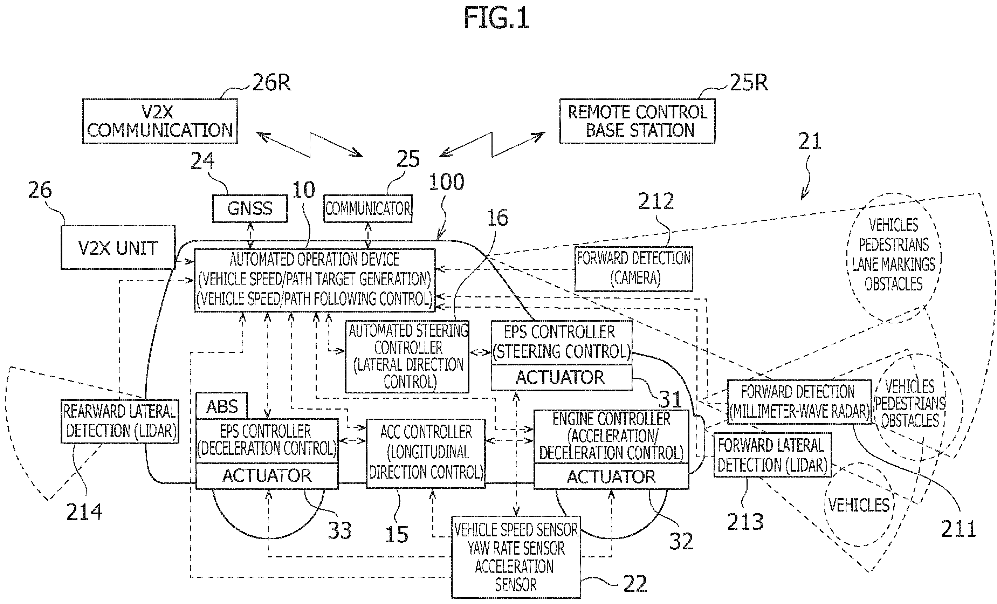

In Figures 1 to 3, the vehicle 100 provided with the driving control system according to the present embodiment is provided with, in addition to typical automobile components such as an engine and a vehicle body, an external sensor 21 that detects the vehicle-surrounding environment, an internal sensor 22 that detects vehicle information, a map information database 23, positioning means 24, a controller and actuator group for speed control and steering control, an ACC controller 15 for inter-vehicle distance control, an automated steering controller 16 for automated steering control, and an automated operation device 10 for unifying the above to execute path following control, so that recognition, determination, and control conventionally performed by the driver are performed by the vehicle. The vehicle 100 is further provided with a communicator 25 for communicating remote control commands, vehicle information and vehicle location information, and the like with a remote-control base station 25R, and a V2X unit 26 that receives sensing information about the vehicle surroundings via V2X communication 26R.

The controller and actuator group for speed control and steering control includes an electronic power steering (EPS) controller 31 for steering control, an engine controller 32 for acceleration and deceleration control, and an ESP/ABS controller 33. An ESP (Electronic Stability Program, registered trademark) includes an anti-lock braking system (ABS) to form a stability control system (vehicle behavior stabilization control system).

The external sensor 21 is composed of a plurality of detection means for inputting lane markings on a road defining the vehicle's own driving lane and neighboring lanes, and the presence of, and relative distances from, other vehicles, obstacles, people, and the like around the vehicle into the automated operation device 10 as external data such as image data or point cloud data.

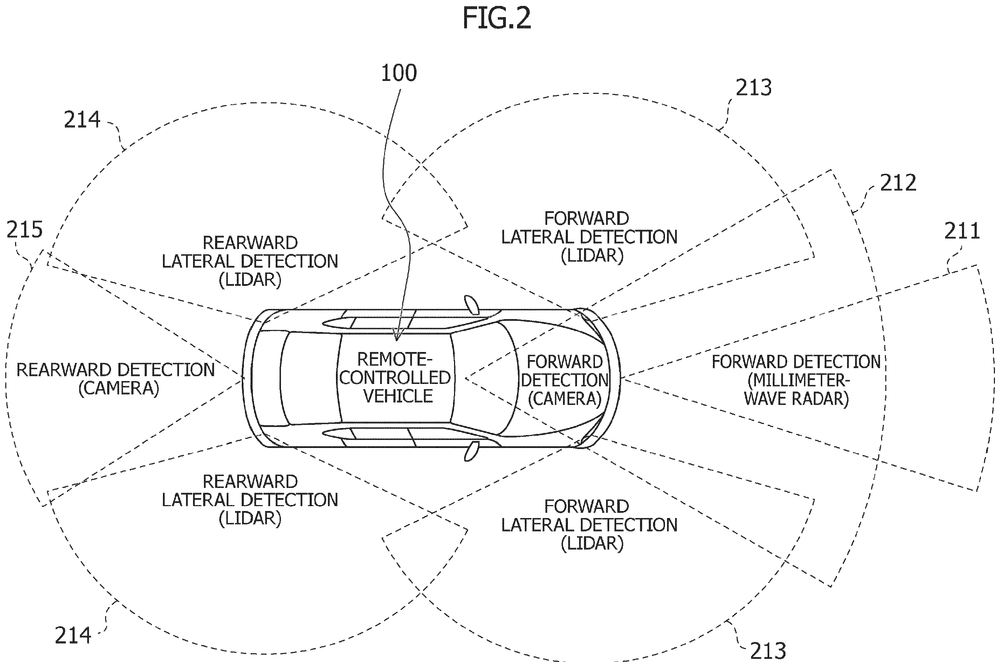

For example, as illustrated in Figure 2, the vehicle 100 is provided with a millimeter wave radar (211) and a camera (212) as front detection means 211 and 212, LIDARs (Laser Imaging Detection And Ranging) as front lateral detection means 213 and rear lateral detection means 214, and a camera (back camera) as rear detection means 215. The external sensor 21 covers 360 degrees around the vehicle, and can detect the positions of, and distances from, other vehicles, obstacles, and the like, and lane marking positions of the vehicle's own driving lane and the neighboring lanes, within a predetermined range in each of the front, rear, left, and right directions of the vehicle. Note that a millimeter wave radar (or LIDAR) can be also added as the rear detection means.

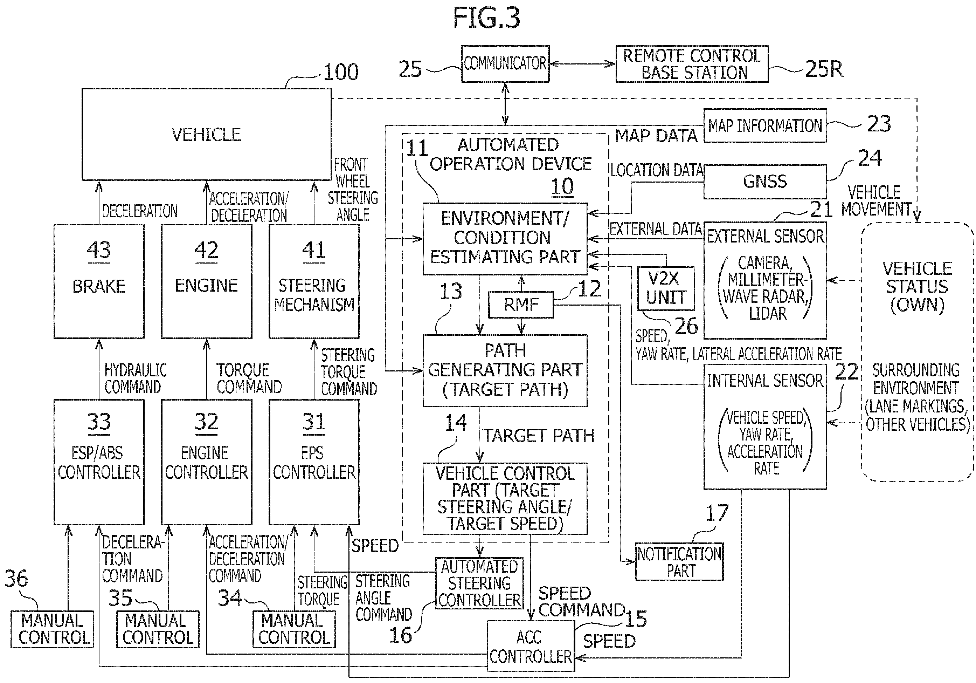

The internal sensor 22 is composed of a plurality of detection means, such as a vehicle speed sensor, a yaw rate sensor, and an acceleration sensor, for measuring physical quantities representing the state of movement of the vehicle. As illustrated in Figure 3, each of the measurement values from the internal sensor 22 is input into the automated operation device 10, the ACC controller 15, the automated steering controller 16, and the EPS controller 31, and is computationally processed together with input from the external sensor 21.

V2X (Vehicle to Everything) is a wireless communication technology for connecting a vehicle to everything, and collectively refers to communication between vehicles (V2V: Vehicle to Vehicle), communication between a vehicle and roadside infrastructure (V2I: Vehicle to Infrastructure), communication between a vehicle and pedestrians (V2P: Vehicle to Pedestrian), and communication between a vehicle and a network (V2N: Vehicle to Network).

The V2X unit 26 is configured to receive other vehicle information from other vehicles by V2V, to receive traffic information (such as congestion information and information about road construction, for example) from a roadside unit by V2I, to detect the presence or absence of pedestrians or bicycles carrying a smartphone by V2P, and to receive map information or the like from an external server (not illustrated) by V2N. In the present embodiment, the V2X unit 26 is configured to acquire information regarding, in particular, the presence or absence of others in traffic (other traffic participants, such as other vehicles, pedestrians, and bicycles) around an intersection as the sensing information about the vehicle surroundings. The sensing information about the vehicle 100 surroundings received by the V2X unit 26 is input into an environmental condition estimating part 11.

The automated operation device 10 includes the environmental condition estimating part 11, a risk mitigation function (RMF) part 12, a path generating part 13, and a vehicle control part 14, and is formed by a computer for implementing functions like those described hereinafter, that is, by ROM storing programs and data, a CPU that performs computational processing, RAM for reading out the programs and data and storing dynamic data and computational processing results, an input-output interface, and the like.

The environmental condition estimating part 11 acquires the absolute location of the vehicle by matching the vehicle location information according to the positioning means 24 such as a global navigation satellite system (GNSS) with map information in the map information database 23, and on the basis of external data such as image data and point cloud data acquired by the external sensor 21, estimates the positions of lane markings of the vehicle's own driving lane and the neighboring lanes, and the positions and speeds of other vehicles. In addition, it acquires the state of movement of the vehicle from internal data measured by the internal sensor 22.

In the case in which road conditions and environmental conditions are outside the operational design domain (ODD), or in the case in which the system does not operate normally, the RMF part 12 determines, on the basis of information input from the environmental condition estimating part 11, whether to activate the risk mitigation function (RMF) for safely stopping the vehicle 100 inside a stopping area designated as a target. In the present embodiment, the RMF is configured to be activated in the case of conditions in which the continuation of remote monitoring and control of the driving control system by the remote-control base station 25R through the communicator 25 has become difficult.

Before the RMF is activated and while the RMF is active, a notification is issued to passengers or occupants of the vehicle 100 and road users outside the vehicle by a notification part 17. Also, in the case in which the direction of travel of the vehicle 100 changes due to the activation of the RMF as described later, a notification indicating that the direction of travel will change may also be issued by the notification part 17. Note that the notification part 17 may also be configured to notify the inside and outside of the vehicle that automated driving by remote monitoring and control has stopped. Methods of notification by the notification part 17 include visual methods such as turning on a lamp and displaying text, and/or auditory methods such as outputting sound or speech.

The path generating part 13 is configured to generate a target path to a final destination from the vehicle location estimated by the environmental condition estimating part 11. The path generating part 13 performs a route search from a place of departure to a destination on the basis of vehicle location information and map information, and generates a general target path, also referred to as a global path. Furthermore, the path generating part 13 generates a detailed target path for automated driving such as lane keeping driving, lane changing, and travel path changing, also referred to as a local path, on the basis of the lane marking positions of the neighboring lanes, the positions and speeds of other vehicles, and the state of movement of the vehicle estimated by the environmental condition estimating part 11. The path generating part 13 is further configured to also generate a target path for RMF activation to a target stopping location in cases in which the vehicle 100 is to be stopped by the activation of the RMF.

The vehicle control part 14 calculates a target vehicle speed and a target steering angle on the basis of the target path generated by the path generating part 13, transmits a speed command for constant-speed driving or inter-vehicle distance maintenance or following driving to the ACC controller 15, and transmits a steering angle command for path following to the EPS controller 31 via the automated steering controller 16.

Note that the vehicle speed is also input into the EPS controller 31 and the ACC controller 15. Since the steering reaction force varies depending on the vehicle speed, the EPS controller 31 references a steering angle-steering torque map according to vehicle speed and transmits a torque command to a steering mechanism 41. By controlling an engine 42, a brake 43, and the steering mechanism 41 with the engine controller 32, the ESP/ABS controller 33, and the EPS controller 31, the movement of the vehicle in the longitudinal direction and the lateral direction is controlled.

### Overview of remote-type automated driving system

Next, an overview of the remote-type automated driving system will be described. The automated driving system in the present embodiment is an automated driving system of the remote monitoring and control method, in which the driving of the vehicle 100 by the automated driving system is monitored by the remote-control base station 25R and controlled from the remote-control base station 25R if necessary.

The automated driving system is a system combining an inter-vehicle distance control system (ACCS: Adaptive Cruise Control System) and continuous automated steering system that continuously and automatically performs lane keeping and lane changing. The automated driving system is executable in a state in which the automated operation device 10 is active together with the ACC controller 15 forming the inter-vehicle distance control system (ACCS) and the automated steering controller 16 forming the continuous automated steering system.

Before the departure of the vehicle 100, an operator of the remote-control base station 25R sets a place of departure and a destination. The set place of departure and destination are input from the remote-control base station 25R into the automated operation device 10 of the vehicle 100 through the communicator 25. The path generating part 13 generates a global path from the place of departure to the destination on the basis of vehicle location information and map information obtained from the environmental condition estimating part 11. The path generating part 13 generates a local path and a target vehicle speed on the basis of external information (lanes, vehicle location, the positions and speeds of other vehicles traveling in the vehicle's own driving lane and the neighboring lanes, and the presence or absence of pedestrians and bicycles) acquired by the external sensor 21 on the basis of the generated global path and internal information (vehicle speed, yaw rate, acceleration) acquired by the internal sensor 22.

The operator of the remote-control base station 25R, upon determining that the environmental conditions, road conditions, and the like are maintained within the operational design domain (ODD), transmits a departure command to the automated operation device 10 causing the vehicle 100 to be driven in accordance with the generated target path and target vehicle speed.

The vehicle control part 14 estimates the speed, posture and lateral displacement of the vehicle Δt seconds later from the vehicle location and the movement characteristics of the vehicle, that is, the relationship between the yaw rate y and the lateral acceleration (d²y/dt²) produced by vehicle movement according to the front wheel steering angle δ produced when steering torque T is imparted to the steering mechanism 41 while driving at the vehicle speed V. The vehicle control part 14 issues a steering angle command to the EPS controller 31 via the automated steering controller 16 such that the lateral displacement will be yt Δt seconds later, and issues a speed command to the ACC controller 15 such that a speed Vt will be obtained Δt seconds later.

The ACC controller 15, the automated steering controller 16, the EPS controller 31, the engine controller 32, and the ESP/ABS controller 33 operate independently and irrespectively of the automated steering, but are also operable according to command inputs from the automated driving controller 10 while the automated driving system is active.

The ESP/ABS controller 33 that has received a deceleration command from the ACC controller 15 controls the vehicle speed by outputting a hydraulic command to the actuator and controlling the braking force of the brake 43. Also, the engine controller 32 that has received an acceleration or deceleration command from the ACC controller 15 controls the vehicle speed by controlling the actuator output (throttle position) to thereby issue a torque command to the engine 42 and control the driving force.

The ACC system (ACCS) functions as a combination of hardware and software, such as a millimeter-wave radar serving as a front detection means 211 forming the external sensor 21, the ACC controller 15, the engine controller 32, and the ESP/ABS controller 33.

That is, in the case in which no vehicle is present ahead, constant-speed driving is performed with the ACC set speed (set speed) treated as the target vehicle speed. In the case of catching up to a vehicle ahead (the case in which the speed of the vehicle ahead is the ACC set speed or less), the vehicle follows the vehicle ahead to match the speed of the vehicle ahead while maintaining an inter-vehicle distance (set inter-vehicle distance) according to a set time gap (time headway = inter-vehicle distance/speed of the vehicle).

In the continuous automated steering system, the lane markings, vehicle location, and the positions and speeds of other vehicles traveling in the neighboring lanes are detected by the environmental condition estimating part 11 of the automated operation device 10 on the basis of image data and point cloud data acquired by the external sensor 21 and vehicle information acquired by the internal sensor 22. On the basis of this information, the continuous automated steering system performs a steering control by the EPS controller 31 through the automated steering controller 16 such that lane keeping control for driving in the center of a lane and lane changing control for crossing lane markings are executed.

That is, the EPS controller 31 that has received a steering angle command from the automated steering controller 16 references a map of vehicle speed-steering angle-steering torque to output a torque command to the actuator (EPS motor), and the steering mechanism 41 issues a front wheel steering angle designated as a target.

As described above, the automated driving system is a system configured by combining longitudinal control (speed control, inter-vehicle distance control) by the ACC controller 15 with lateral control (lane keeping control, lane changing control) by the automated steering controller 16. The automated driving system of the remote type monitors the driving of the vehicle 100 with the remote-control base station 25R and controls the driving of the vehicle 100 according to remote control commands from the remote-control base station 25R.

### Risk mitigation function (RMF) of automated driving system

While the automated driving system is active, the environmental condition estimating part 11 continuously monitors whether the driving status of the vehicle, the surrounding environmental conditions, and the like are maintained within the operational design domain (ODD) of the system, on the basis of external information acquired through the external sensor 21, vehicle information acquired by the internal sensor 22, communication conditions with the remote control base station 25R, and the like. In the case of being outside the ODD or the case in which the system does not operate normally, activation of the RMF for safely stopping the vehicle 100 inside a target stopping area is demanded.

In cases in which remote monitoring and control of the vehicle 100 by the remote-control base station 25R has become difficult, such as when communication with the remote-control base station 25R is disconnected or when the communicator 25 malfunctions, the RMF part 12 determines to activate the RMF on the basis of a signal from the environmental condition estimating part 11, and activates the RMF for guiding the vehicle 100 to stop in a target stopping area. Ordinarily, a space in which the vehicle 100 can stop on the target path of the automated driving is set as the target stopping area of the RMF. However, in the case in which the RMF is activated in the vicinity of an intersection, there is a possibility of encountering others in traffic (other traffic participants) or disturbing the traffic flow at the intersection while decelerating and guiding the vehicle 100 to the target stopping area on the target path.

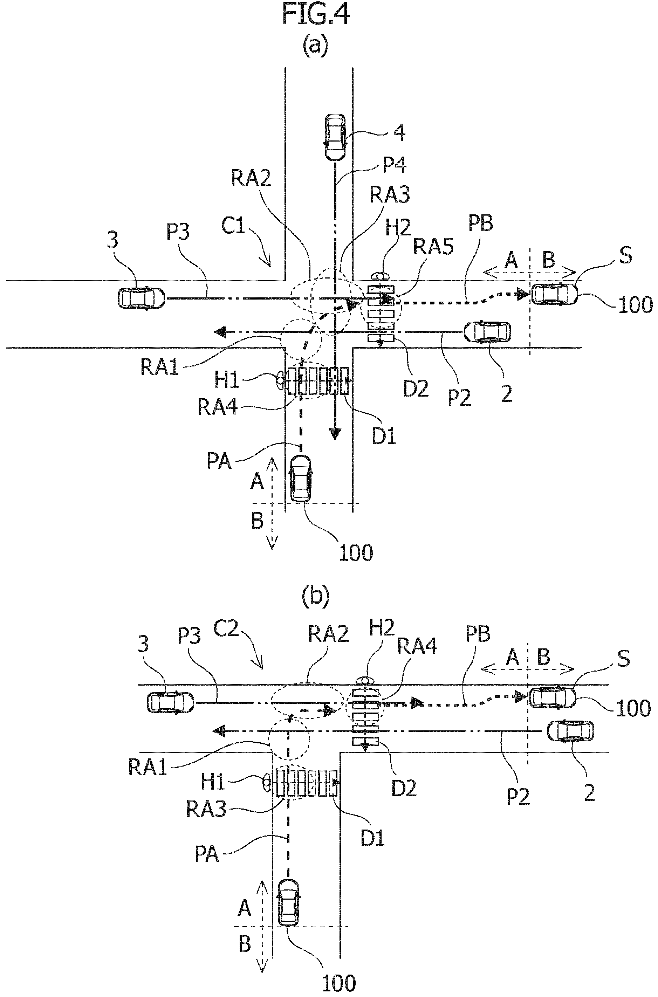

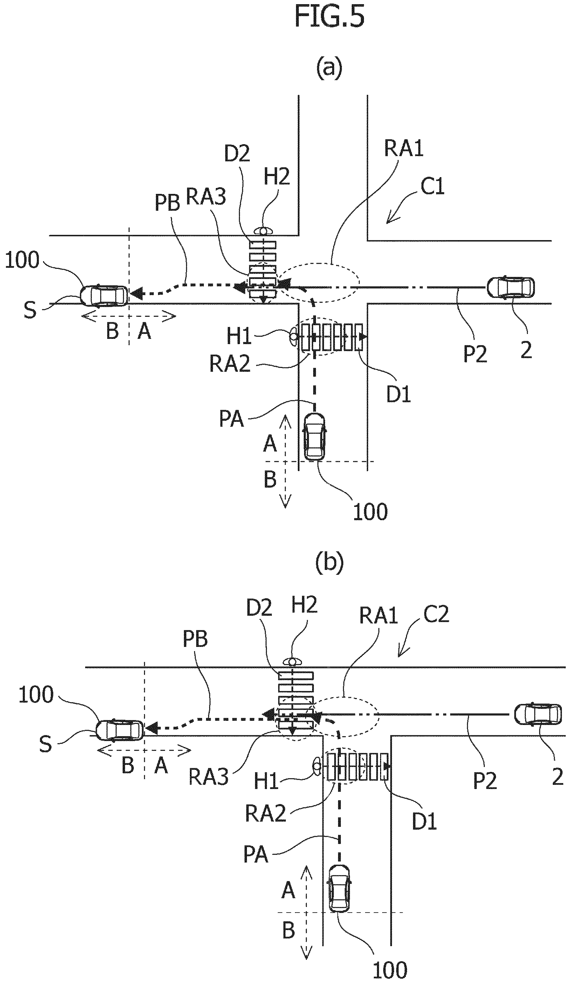

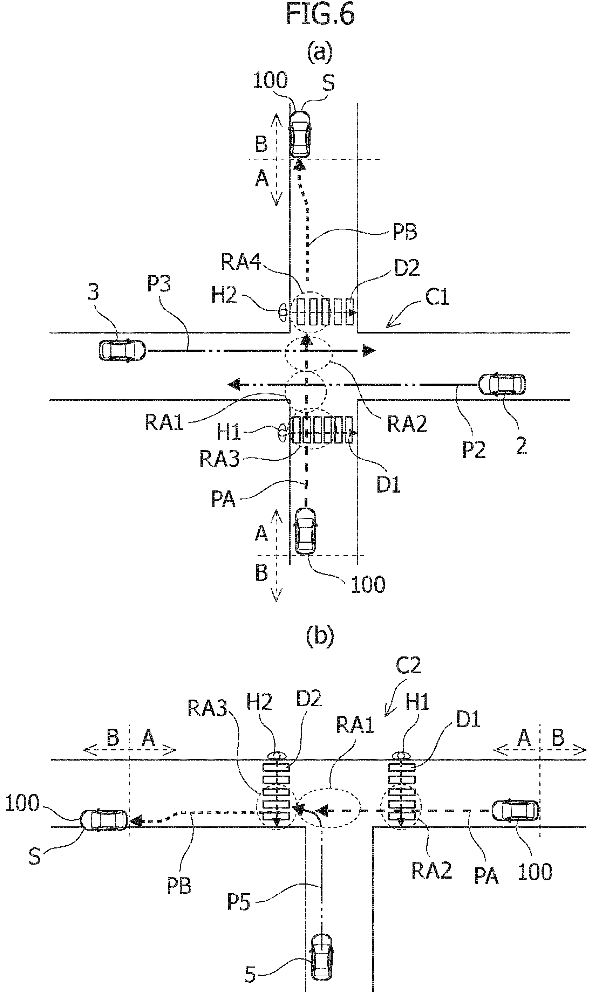

Reference will be made to Figures 4 to 6 to explain the relationship between a stopping location of the vehicle and other traffic participants around an intersection. Figures 4(a) and 4(b) illustrate examples of making a right turn at an intersection, Figures 5(a) and 5(b) illustrate examples of making a left turn at an intersection, and Figures 6(a) and 6(b) illustrate examples of going straight through an intersection.

Figures 4(a) and 4(b) illustrate examples in which the RMF is activated in the vicinity of an intersection with no traffic signal. Note that traffic rules include left-hand traffic and right-hand traffic, but in the following description, left-hand traffic is described as an example.

In the example of a crossroads illustrated in Figure 4(a), the target path of the vehicle 100 is set to a path that makes a right turn at an intersection C1, as indicated by an arrow PA. Around the intersection C1, in addition to the vehicle 100, there may be present a straight-through vehicle 2 on the right that enters the intersection C1 on a path of travel P2 from the right, a straight-through vehicle 3 on the left that enters the intersection C1 on a path of travel P3 from the left, and an oncoming straight-through vehicle 4 that enters the intersection C1 from the oncoming lane on a path of travel P4. Pedestrian crossings are provided in front and on the right-turn side of the intersection C1 as seen from the vehicle 100. In this case, there may be present a pedestrian H1 attempting to cross the pedestrian crossing D1 in front of the intersection C1 and a pedestrian H2 attempting to cross the pedestrian crossing D2 on the right-turn side.

Here, in the case in which the continuation of communication between the vehicle 100 and the remote-control base station 25R has become difficult in the vicinity of the intersection C1, the RMF part 12 determines that activation of the RMF is necessary.

In the case in which a target stopping location S is set on the target path after making a right turn at the intersection C1, the vehicle 100, according to RMF activation of the automated operation device 10, makes a right turn along the path PA and is then guided along the path for RMF indicated by an arrow PB to stop at the target stopping location S. In this case, when making the right turn at the intersection C1, there are a risk for the vehicle 100 of encountering the straight-through vehicle 2 on the right in a risk area RA1, a risk of encountering the straight-through vehicle 3 on the left in a risk area RA2, and additionally a risk of encountering the oncoming straight-through vehicle 4 in a risk area RA3. Also, there is a risk for the vehicle 100 of encountering the pedestrian H1 crossing the pedestrian crossing D1 in a risk area RA4 and a risk of encountering the pedestrian H2 crossing the pedestrian crossing D2 in a risk area RA5.

In this way, in the case in which the RMF is activated in the vicinity of the intersection C1, a plurality of encounter points at which there is a possibility of encountering other traffic participants are generated. In the case of making a right turn at the intersection C1, as illustrated in Figure 4(a), risks such as contact or collision with other traffic participants occur in the plurality of risk areas RA1 to RA5. That is, risk areas occur in up to five places on the basis of the road structure of the intersection C1.

In the example of a T-junction illustrated in Figure 4(b), the target path of the vehicle 100 is set to a path that makes a right turn at an intersection C2, as indicated by an arrow PA. Around the intersection C2, in addition to the vehicle 100, there may be present a straight-through vehicle 2 on the right that enters the intersection C2 on a path of travel P2 from the right and a straight-through vehicle 3 on the left that enters the intersection C2 on a path of travel P3 from the left. Also, pedestrian crossings are provided in front and on the right-turn side of the intersection C2 as seen from the vehicle 100, and there may be a pedestrian H1 attempting to cross the pedestrian crossing D1 in front of the intersection C2 and a pedestrian H2 attempting to cross the pedestrian crossing D2 on the right-turn side.

Here, in the case in which the continuation of communication between the vehicle 100 and the remote-control base station 25R has become difficult in the vicinity of the intersection C2, the RMF part 12 determines that activation of the RMF is necessary.

In the case in which a target stopping area S is set on the target path after making a right turn at the intersection C2, the vehicle 100, according to RMF activation of the automated operation device 10, makes a right turn along the path PA and is then guided along the path for RMF indicated by an arrow PB to stop at the target stopping location S. In this case, when making the right turn at the intersection C2, a risk of encountering the straight-through vehicle 2 on the right in a risk area RA1 and a risk of encountering the straight-through vehicle 3 on the left in a risk area RA2 exist for the vehicle 100. Also, a risk of encountering the pedestrian H1 crossing the pedestrian crossing D1 in a risk area RA3 and a risk of encountering the pedestrian H2 crossing the pedestrian crossing D2 in a risk area RA4 exist for the vehicle 100.

In this way, in the case in which the RMF is activated in the vicinity of the intersection C2, a plurality of encounter points at which there is a possibility of encountering other traffic participants are generated. As illustrated in Figure 4(b), in the case of making a right turn at the intersection C2, risks such as contact or collision with other traffic participants occur in the plurality of risk areas RA1 to RA4. That is, risk areas occur in up to four places on the basis of the road structure of the intersection C2.

Figures 5(a) and 5(b) illustrate examples in which the RMF is activated in the vicinity of an intersection with no traffic signal. In the example of a crossroads illustrated in Figure 5(a), the target path of the vehicle 100 is set to a path that makes a left turn at an intersection C1, as indicated by an arrow PA. Around the intersection C1, in addition to the vehicle 100, there may be present a straight-through vehicle 2 on the right. Pedestrian crossings are provided in front and on the left-turn side of the intersection C1 as seen from the vehicle 100, and there may be present a pedestrian H1 attempting to cross the pedestrian crossing D1 in front of the intersection C1 and a pedestrian H2 attempting to cross the pedestrian crossing D2 on the left-turn side.

Here, in the case in which the continuation of communication between the vehicle 100 and the remote-control base station 25R has become difficult in the vicinity of the intersection C1, the RMF part 12 determines that activation of the RMF is necessary.

In the case in which a target stopping location S is set on the target path after making a left turn at the intersection C1, the vehicle 100, according to RMF activation of the automated operation device 10, makes a left turn along the path PA and is then guided along the path for RMF indicated by the arrow PB to stop at the target stopping location S. In this case, when making the left turn at the intersection C1, a risk of encountering the straight-through vehicle 2 on the right in a risk area RA1 exists for the vehicle 100. Also, a risk of encountering the pedestrian H1 crossing the pedestrian crossing D1 in a risk area RA2 and a risk of encountering the pedestrian H2 crossing the pedestrian crossing D2 in a risk area RA3 exist for the vehicle 100.

In this way, in the case in which the RMF is activated in the vicinity of the intersection C1, a plurality of encounter points at which there is a possibility of encountering other traffic participants are generated. In the case of making a left turn at the intersection C1, as illustrated in Figure 5(a), risks such as contact or collision with other traffic participants occur in the plurality of risk areas RA1 to RA3. That is, risk areas occur in up to three places on the basis of the road structure of the intersection C1.

In the example of a T-junction illustrated in Figure 5(b), the target path of the vehicle 100 is set to a path that makes a left turn at an intersection C2, as indicated by an arrow PA. Around the intersection C2, in addition to the vehicle 100, there may be present a straight-through vehicle 2 on the right. Also, pedestrian crossings are provided in front and on the left-turn side of the intersection C2 as seen from the vehicle 100, and there may be present a pedestrian H1 attempting to cross the pedestrian crossing D1 in front of the intersection C2 and a pedestrian H2 attempting to cross the pedestrian crossing D2 on the left-turn side.

Here, in the case in which the continuation of communication between the vehicle 100 and the remote-control base station 25R has become difficult in the vicinity of the intersection C2, the RMF part 12 determines that activation of the RMF is necessary.

In the case in which a target stopping area S is set on the target path after making a left turn at the intersection C2, the vehicle 100, according to RMF activation of the automated operation device 10, makes a left turn along the path PA and is then guided along the path for RMF indicated by an arrow PB to stop at the target stopping location S. In this case, when making the left turn at the intersection C2, a risk of encountering the straight-through vehicle 2 on the right in a risk area RA1, a risk of encountering the pedestrian H1 crossing the pedestrian crossing D1 in a risk area RA2, and a risk of encountering the pedestrian H2 crossing the pedestrian crossing D2 in a risk area RA3 exist for the vehicle 100.

In this way, in the case in which the RMF is activated in the vicinity of the intersection C2, a plurality of encounter points at which there is a possibility of encountering other traffic participants are generated. As illustrated in Figure 5(b), in the case of making a left turn at the intersection C2, risks such as contact or collision with other traffic participants occur in the plurality of risk areas RA1 to RA3. That is, risk areas occur in up to three places on the basis of the road structure of the intersection C2.

Figures 6(a) and 6(b) illustrate examples in which the RMF is activated in the vicinity of an intersection with no traffic signal. In the example of a crossroads illustrated in Figure 6(a), the target path of the vehicle 100 is set to a path that goes straight through an intersection C1, as indicated by an arrow PA. Around the intersection C1, in addition to the vehicle 100, there may be present a straight-through vehicle 2 on the right and a straight-through vehicle 3 on the left. Pedestrian crossings are provided in front of the intersection C1 and on the far side of the intersection C1 as seen from the vehicle 100, and there may be present a pedestrian H1 attempting to cross the pedestrian crossing D1 in front of the intersection C1 and a pedestrian H2 attempting to cross the pedestrian crossing D2 on the far side of the intersection C1.

Here, in the case in which the continuation of communication between the vehicle 100 and the remote-control base station 25R has become difficult in the vicinity of the intersection C1, the RMF part 12 determines that activation of the RMF is necessary.

In the case in which a target stopping location S is set on the target path after going straight through the intersection C1, the vehicle 100, according to RMF activation of the automated operation device 10, goes straight along the path PA and is then guided along the path for RMF indicated by an arrow PB to stop at the target stopping location S. In this case, when going straight through the intersection C1, a risk of encountering the straight-through vehicle 2 on the right in a risk area RA1 and a risk of encountering the straight-through vehicle 3 on the left in a risk area RA2 exist for the vehicle 100. Also, a risk of encountering the pedestrian H1 crossing the pedestrian crossing D1 in a risk area RA3 and a risk of encountering the pedestrian H2 crossing the pedestrian crossing D2 in a risk area RA4 exist for the vehicle 100.

In this way, in the case in which the RMF is activated in the vicinity of the intersection C1, a plurality of encounter points at which there is a possibility of encountering other traffic participants are generated. In the case of going straight through the intersection C1, as illustrated in Figure 6(a), risks such as contact or collision with other traffic participants occur in the plurality of risk areas RA1 to RA4. That is, risk areas occur in up to four places on the basis of the road structure of the intersection C1.

In the case of a T-junction illustrated in Figure 6(b), the target path of the vehicle 100 is set to a path that goes straight through an intersection C2, as indicated by an arrow PA. Around the intersection C2, in addition to the vehicle 100, there may be present a left/right-turning vehicle 5 entering the intersection C2 on a path P5 for making a right turn or a left turn. Also, pedestrian crossings are provided in front of the intersection C2 and on the far side of the intersection C2 as seen from the vehicle 100, and there may be present a pedestrian H1 attempting to cross the pedestrian crossing D1 in front of the intersection C2 and a pedestrian H2 attempting to cross the pedestrian crossing D2 on the far side of the intersection C2.

Here, in the case in which the continuation of communication between the vehicle 100 and the remote-control base station 25R has become difficult in the vicinity of the intersection C2, the RMF part 12 determines that activation of the RMF is necessary.

In the case in which a target stopping area S is set on the target path after going straight through the intersection C2, the vehicle 100, according to RMF activation of the automated operation device 10, goes straight along the path PA and is then guided along the path for RMF indicated by an arrow PB to stop at the target stopping location S. In this case, when going straight through the intersection C2, a risk of encountering the left/right-turning vehicle 5 in a risk area RA1 exists for the vehicle 100. Also, a risk of encountering the pedestrian H1 crossing the pedestrian crossing D1 in a risk area RA2 and a risk of encountering the pedestrian H2 crossing the pedestrian crossing D2 in a risk area RA3 exist.

In this way, in the case in which the RMF is activated in the vicinity of the intersection C2, a plurality of encounter points at which there is a possibility of encountering other traffic participants are generated. As illustrated in Figure 6(b), in the case of going straight through the intersection C2, risks such as contact or collision with other traffic participants occur in the plurality of risk areas RA1 to RA3. That is, risk areas occur in up to three places on the basis of the road structure of the intersection C2.

In this way, in the case in which the RMF is activated in the vicinity of an intersection, when the vehicle 100 enters and passes through the intersection, encounter points with the straight-through vehicle 2 on the right, the straight-through vehicle 3 on the left, the oncoming straight-through vehicle 4, and the left/right-turning vehicle 5 occur. Also, at an intersection with no traffic signal in particular, encounter points with pedestrians crossing a pedestrian crossing in front of the intersection or after passing through the intersection occur. At such encounter points, risks such as contact or collision between the vehicle 100 and other traffic participants occur. Also, if the stopping location of the vehicle 100 according to the RMF is set immediately before or immediately after the intersection, there is a possibility of disturbing the traffic flow of other traffic participants.

Accordingly, in the present embodiment, in the case in which the RMF is activated in the vicinity of an intersection, the target stopping location for RMF is set to an area with which risks such as contact or collision or the like between the vehicle 100 and other traffic participants can be reduced, and furthermore, the influence on the traffic flow of other traffic participants can be moderated.

Here, the case in which the RMF is activated in the vicinity of an intersection means a situation in which, for example, if the RMF is activated to decelerate and stop the vehicle 100, the vehicle 100 is made to stop at or near the intersection, and as a result, the risk of disturbing the traffic flow or contact or collision with other traffic participants at the intersection or the like may occur. For example, the case of being in a stage (a point in space or a point in time) at which the vehicle 100 cannot be brought to a stop in front of a no-stop area near an intersection described later, even if decelerated by a prescribed deceleration by the activation of the RMF, the RMF is determined to be activated in the vicinity of the intersection. That is, the vicinity of an intersection can be defined to be a predetermined area in front of an intersection in which, if the RMF is activated to decelerate the vehicle 100 by a prescribed deceleration (for example, 4.0 m/s²), the vehicle 100 would come to a stop inside a no-stop area.

Note that even if in the so-called "vicinity of an intersection", the case in which the vehicle 100 is already traveling in a dedicated left or right-turn lane to follow a target path of automated driving, the case in which automated steering by automated driving is already occurring, and the like may be excluded from the activation of the RMF in the vicinity of an intersection described below. This is because changing the path for RMF in the situation in which preparations for making a left or right turn are already being made may inadvertently increase risk.

Hereinafter, the setting of the target stopping location for RMF in the present embodiment will be described.

### Setting of target stopping location for RMF

In the present embodiment, the target stopping location for RMF is set according to the following basic principles.

### (1) Reduce encounter points with other traffic participants

Encounter points with other traffic participants are reduced by setting a plurality of target stopping location candidates.

### (2) Reduce influence on traffic flow of other traffic participants

The influence on traffic flow of other traffic participants is reduced by setting a no-stop area in a prescribed area near an intersection and including the intersection.

### (3) Determine target stopping location through comparison of risk factors

The target stopping location is determined by comparing risk factors of the plurality of target stopping location candidates.

Hereinafter, the setting of the target stopping location for RMF will be described in detail.

### (1) Reduce encounter points with other traffic participants

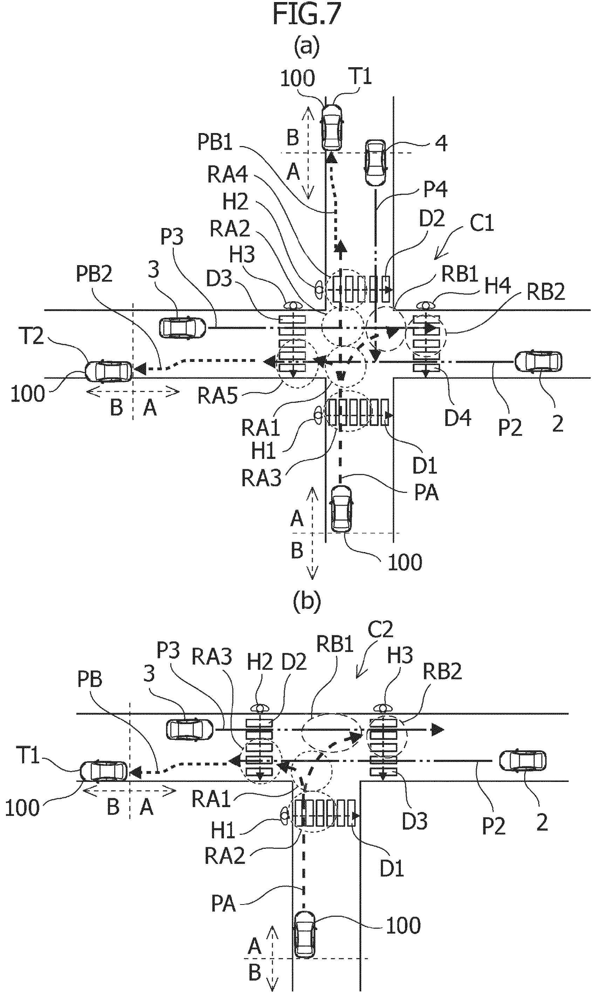

First, Figures 7(a) and 7(b) will be used to describe the setting of a plurality of target stopping location candidates in consideration of reducing encounter points with other traffic participants. The automated operation device 10 is configured to acquire the vehicle location with the environmental condition estimating part 11 by matching vehicle location information from the positioning means 24 with map information in the map information database 23, and to search for a plurality of target stopping location candidates with the RMF part 12 in the case of RMF activation on the basis of the vehicle location and map information about the surroundings, continuously during automated driving. As for the target stopping location candidates for RMF, locations on paths different from the global path set by the automated operation device 10 may be set in consideration of reducing encounter points with other traffic participants.

Figure 7(a) illustrates an example of an intersection C1 which is a crossroads with no traffic signal. As illustrated in Figure 7(a), around the intersection C1, in addition to the vehicle 100 in front of the intersection C1, there may be present a straight-through vehicle 2 on the right, a straight-through vehicle 3 on the left, and an oncoming straight-through vehicle 4. Also, there may be present a pedestrian H1 attempting to cross a pedestrian crossing D1 in front of the intersection C1, a pedestrian H2 attempting to cross a pedestrian crossing D2 on the far side of the intersection C1, a pedestrian H3 attempting to cross a pedestrian crossing D3 on the left-turn side, and a pedestrian H4 attempting to cross a pedestrian crossing D4 on the right-turn side.

In the case in which the RMF is activated in the vicinity of the intersection C1, the direction of travel of a target path PA may be the straight-through direction, the left-turn direction, or the right-turn direction of the intersection C1. Accordingly, in the example illustrated in Figure 7(a), the RMF part 12 sets a target stopping location candidate T1 on a path going straight through the intersection C1 and a target stopping location candidate T2 on a path making a left turn at the intersection C1. The target stopping location candidates T1 and T2 are each set in an area such as the left side of the vehicle's own driving lane or the road shoulder. In the case in which the RMF is activated, the vehicle 100 is guided automatically on the path according to the RMF indicated by arrows PB1 or PB2 and brought to a stop at the location T1 or the location T2.

In this way, the RMF part 12 sets the target stopping location candidates T1 and T2 in areas that can be reached by only a path going straight through the intersection C1 or a path making a left turn, and a target stopping location candidate is not set on a path making a right turn at the intersection C1. Even if the target stopping location candidate T1 or T2 is set on a path going straight through or making a left turn at the intersection C1, as illustrated in Figure 7(a), a risk area RA1 of encountering with the straight-through vehicle 2 on the right, a risk area RA2 of encountering with the straight-through vehicle 3 on the left, and risk areas RA3 to RA5 of encounters with the pedestrians H1 to H3 remain. However, by excluding a path making a right turn at the intersection C1, a risk area RB1 of encountering with the straight-through vehicle 3 on the left and the oncoming straight-through vehicle 4 and a risk area RB2 of encountering with the pedestrian H4 can be cleared.

Figure 7(b) illustrates an example of an intersection C2 which is a T-junction with no traffic signal. As illustrated in Figure 7(b), around the intersection C2, in addition to the vehicle 100 in front of the intersection C2, there may be present a straight-through vehicle 2 on the right and a straight-through vehicle 3 on the left. Also, there may be present a pedestrian H1 attempting to cross a pedestrian crossing D1 in front of the intersection C2, a pedestrian H2 attempting to cross a pedestrian crossing D2 on the left-turn side, and a pedestrian H3 attempting to cross a pedestrian crossing D3 on the right-turn side.

In the case in which the RMF is activated in the vicinity of the intersection C2, the direction of travel of a target path PA may be the left-turn direction or the right-turn direction of the intersection C2. Accordingly, in the example illustrated in Figure 7(b), the RMF part 12 sets a target stopping location candidate T1 on a path making a left turn at the intersection C2. The target stopping location candidate T1 is set in an area such as the left side of the vehicle's own driving lane or the road shoulder. In the case in which the RMF is activated, the vehicle 100 is guided automatically on the path according to the RMF indicated by an arrow PB and brought to a stop at the location T1.

In this way, the RMF part 12 sets the target stopping location candidate T1 in an area that can be reached by only a path making a left turn at the intersection C2, and a target stopping location candidate is not set on a path making a right turn at the intersection C2. Even if the target stopping location candidate T1 is set on a path making a left turn at the intersection C2, as illustrated in Figure 7(b), a risk area RA1 of encountering with the straight-through vehicle 2 on the right and risk areas RA2 and RA3 of encountering with the pedestrians H1 and H2 remain. However, by excluding a path making a right turn at the intersection C2, a risk area RB 1 of encountering with the straight-through vehicle 3 on the left and a risk area RB2 of encountering with the pedestrian H3 can be cleared.

### (2) Reduce influence on traffic flow of other traffic participants

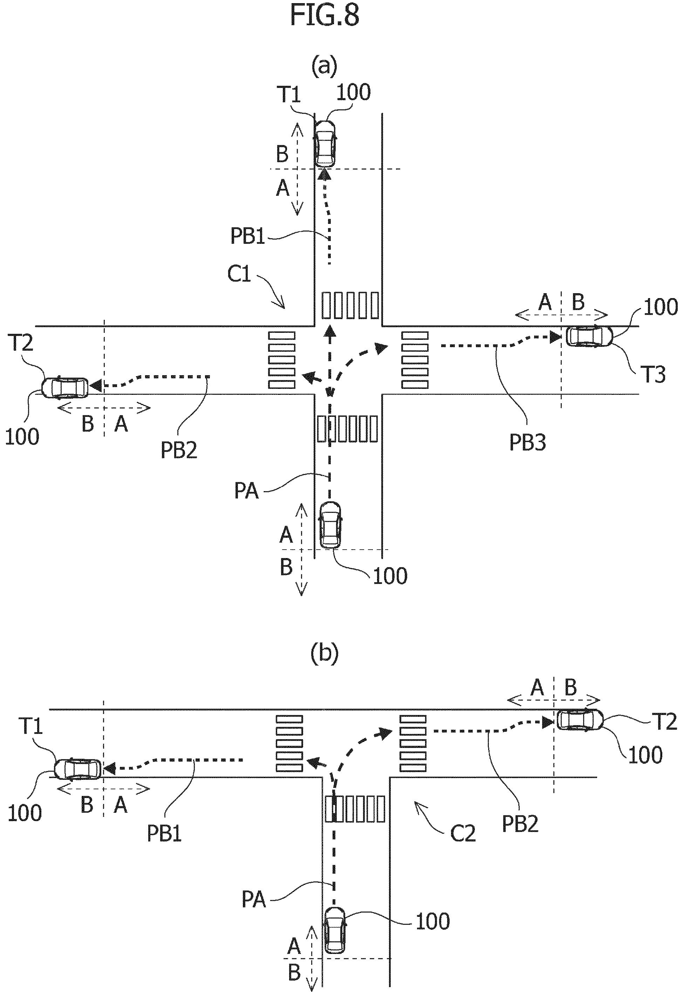

Next, reference will be made to Figures 8(a) and 8(b) to describe the setting of a plurality of target stopping location candidates in consideration of the influence on traffic flow of other traffic participants.

Figure 8(a) illustrates an example of an intersection C1 which is a crossroads with no traffic signal. As illustrated in Figure 8(a), the vehicle 100 is present in front of the intersection C1. Pedestrian crossings are provided in front of the intersection C1 and on the far side, the left-turn side, and the right-turn side of the intersection C1. In the case in which the RMF is activated in the vicinity of the intersection C1, the direction of travel of a target path PA may be the straight-through direction, the left-turn direction, or the right-turn direction of the intersection C1.

At and near the intersection C1, a no-stop zone (no-stop area) A to be excluded from the search for target stopping location candidates is provided. If the vehicle 100 is brought to a stop in, immediately before, or immediately after the intersection C1 by RMF activation, there is a possibility of impeding the traffic flow of other traffic participants. Accordingly, by providing the no-stop zone A, the influence on the traffic flow of other traffic participants is reduced. Since target stopping location candidates are not set in a no-stop zone A, the no-stop zone A may also be set as a range to be excluded from the setting of the target stopping location.

An appropriate range is set for the no-stop zone A such that the influence on the traffic flow of other traffic participants at the intersection C1 is reduced. For example, an area on the inner side of the intersection edges, an area inside the stop lines for an intersection with stop lines, an area within a certain distance (for example, 6 meters) from the intersection edges for an intersection with no stop lines or pedestrian crossings, an area inside pedestrian crossings for an intersection with no stop lines but with pedestrian crossings, or a no-parking/stopping zone can be set as a no-stop zone A at the intersection and near the intersection.

Note that a no-travel direction to be excluded from the search for target stopping location candidates is not set ahead in the direction of travel. That is, at a crossroads intersection, it is also possible to set a target stopping location for RMF in the right-turn direction, that is, a direction of travel in which the vehicle 100 needs to cut across the oncoming lane.

Figure 8(a) illustrates an example in which an area within a certain distance from the intersection edges is set as a no-stop zone A. In this case, the RMF part 12 sets a target stopping location candidate T1 in a stoppable zone B past the no-stop zone A on a path going straight through the intersection C1, sets a target stopping location candidate T2 in a stoppable zone B past the no-stop zone A on a path making a left turn at the intersection C1, and sets a target stopping location candidate T3 in a stoppable zone B past the no-stop zone A on a path making a right turn at the intersection C1. The target stopping location candidates T1 to T3 are each set in an area such as the left side of the vehicle's own driving lane or the road shoulder. In the case in which the RMF is activated, the vehicle 100 is guided automatically on the path according to the RMF indicated by an arrow PB1, PB2, or PB3 and brought to a stop at the location T1, the location T2, or the location T3.

Figure 8(b) illustrates an example in which an area within a certain distance from the intersection edges is set as a no-stop zone A in the example of an intersection C2 which is a T-junction with no traffic signal. As illustrated in Figure 8(b), the vehicle 100 is present in front of the intersection C2, and pedestrian crossings are provided in front of the intersection C2 and on the left-turn side and the right-turn side. In the case in which the RMF is activated in the vicinity of the intersection C2, the direction of travel of a target path PA may be the left-turn direction or the right-turn direction of the intersection C2.

In this case, the RMF part 12 sets a target stopping location candidate T1 in a stoppable zone B past the no-stop zone A on a path making a left turn at the intersection C2 and sets a target stopping location candidate T2 in a stoppable zone B past the no-stop zone A on a path making a right turn at the intersection C2. The target stopping location candidates T1 and T2 are set in an area such as the left side of the vehicle's own driving lane or the road shoulder. In the case in which the RMF is activated, the vehicle 100 is guided automatically on the path according to the RMF indicated by an arrow PB1 or PB2 and brought to a stop at the location T1 or the location T2.

### (3) Determine target stopping location through comparison of risk factors

Next, the determination of the target stopping location through a comparison of risk factors of the plurality of target stopping location candidates will be described.

The RMF part 12 determines the target stopping location used when the RMF is activated by accounting for real-time information regarding the presence or absence of other traffic participants around the intersection input from the V2X unit 26 through the environmental condition estimating part 11. Note that for a suburban intersection or the like with good visibility, information regarding the presence or absence of other traffic participants (such as other vehicles, pedestrians, and bicycles) around the intersection can also be acquired by image data from the camera (in-vehicle camera) 212 as sensing information about the vehicle surroundings. That is, in the present embodiment, the target stopping location for RMF is determined on the basis of real-time information about the vehicle surroundings acquired through the use of V2X communication technology and the like.

The RMF part 12 sets a plurality of target stopping location candidates with consideration for reducing encounter points and reducing influence on traffic flow, as described in (1) and (2) above. For each of the plurality of target stopping location candidates that have been set, the RMF part 12 calculates a risk factor RF expressing how high a risk there is for the vehicle 100 to reach the target stopping location candidate from the current location. The risk factor RF is a larger value for a higher risk.

Specifically, the risk factor RF is calculated as the total (Rf1 + Rf2 + Rf3) of points Rf1 related to the number of encounter points between the vehicle 100 and other traffic participants at and near the intersection, points Rf2 related to a predicted travel distance from the current location of the vehicle 100 to each target stopping location candidate, and points Rf3 related to a predicted travel time from the current location of the vehicle 100 to each target stopping location candidate.

The points Rf1 related to the number of encounter points are calculated on the basis of the number of encounter points with other traffic participants on a path from the current location of the vehicle 100 to the target stopping location candidate, based on the point of view that the risk of contact or collision increases with respect to a greater number of encounter points between the vehicle 100 and other traffic participants. For example, 10 points at a time are added for each increase of one encounter point, so that there are 10 points in the case of one encounter point, 20 points in the case of two encounter points... and 50 points in the case of five encounter points. The number of encounter points can be ascertained on the basis of map information, external information acquired by the external sensor 21, and sensing information about the vehicle surroundings from V2X communication, for example, and may differ depending on conditions such as the presence or absence of other vehicles and pedestrians, the presence or absence of a bicycle traffic signal, and the presence or absence of pedestrian crossings on the vehicle's own path of travel and the intersection.

In the present embodiment, real-time information related to the presence or absence of other traffic participants around the intersection acquired by the V2X unit 26 or the in-vehicle camera 212 is reflected in the calculation of the points Rf1 related to the number of encounter points. That is, from among a maximum number of risk areas based on the vehicle location information according to the GNSS or other positioning means 24 and the road structure acquired from the map information in the map information database 23, only risk areas in which the presence of other traffic participants is detected are counted as the number of encounter points. Here, for pedestrians near the intersection, whether or not there is a pedestrian approaching the intersection, waiting at the intersection, or crossing a pedestrian crossing of the intersection is detected from sensing information. Pedestrians going away from the intersection, even if near the intersection, are determined to have no possibility of encountering the vehicle 100 and are not counted in the number of encounter points.

The points Rf2 related to predicted travel distance are calculated on the basis of a predicted travel distance from the current location of the vehicle 100 to the target stopping location candidate, based on the point of view that the risk of contact or collision increases with respect to a longer distance until the vehicle 100 stops. For example, 0.5 points are added every time the predicted travel distance increases by 10 meters, so that there are 0.5 points in the case in which the predicted travel distance is 10 meters, 1 point in the case of 20 meters ... and 2.5 points in the case of 50 meters. The predicted travel distance can be estimated on the basis of the vehicle location and map information about the surroundings, for example.

The points Rf3 related to predicted travel time are calculated on the basis of a predicted travel time from the current location of the vehicle 100 to the target stopping location candidate, based on the point of view that the risk of contact or collision increase with respect to a longer time until the vehicle 100 stops. For example, 1 point is added every time the predicted travel time increases by 10 seconds, so that there are 1 point in the case in which the predicted travel time is 10 seconds, 2 points in the case of 20 seconds ... and 5 points in the case of 50 seconds. The predicted travel time, although not limited to the following, is calculated by assuming that the RMF is activated while the vehicle 100 is traveling at a vehicle speed of 40 km/h, so that the vehicle is decelerated to 10 km/h at deceleration of 4.0 m/s², travels at a constant speed, and then is decelerated gradually (for example, at deceleration of 1.96 m/s²) immediately before reaching the target stopping location candidate, so as to stop at the target stopping location candidate, for example.

Note that the specific values of the points Rf1 related to the number of encounter points, the points Rf2 related to the predicted travel distance, and the points Rf3 related to the predicted travel time described above are examples, and the use of values other than the above is obviously possible. However, it is preferable to apply a weighting such that the weights increase in the order of the points Rf1 related to the number of encounter points, the points Rf3 related to the predicted travel time, and the points Rf2 related to the predicted travel distance. This is in consideration of the risk being higher when there is a greater number of encounter points at which there is a possibility of encountering other traffic participants, furthermore, the risk being thought to increase more with respect to a longer travel time until stopping at the target stopping location than the case of a longer travel distance, and so on.

Also, in the case in which the risk factors RF of a plurality of target stopping location candidates take the same value, the target stopping location S is selected such that the direction of travel to the target stopping location candidate is preferentially in the order of the direction going straight through the intersection, the direction in which the vehicle 100 turns at the intersection without cutting across the oncoming lane, and the direction in which the vehicle 100 cuts across the oncoming lane at the intersection.

The RMF part 12 compares the risk factors RF calculated for the plurality of target stopping location candidates, and selects the target stopping location candidate with the smallest risk factor RF as the target stopping location S.

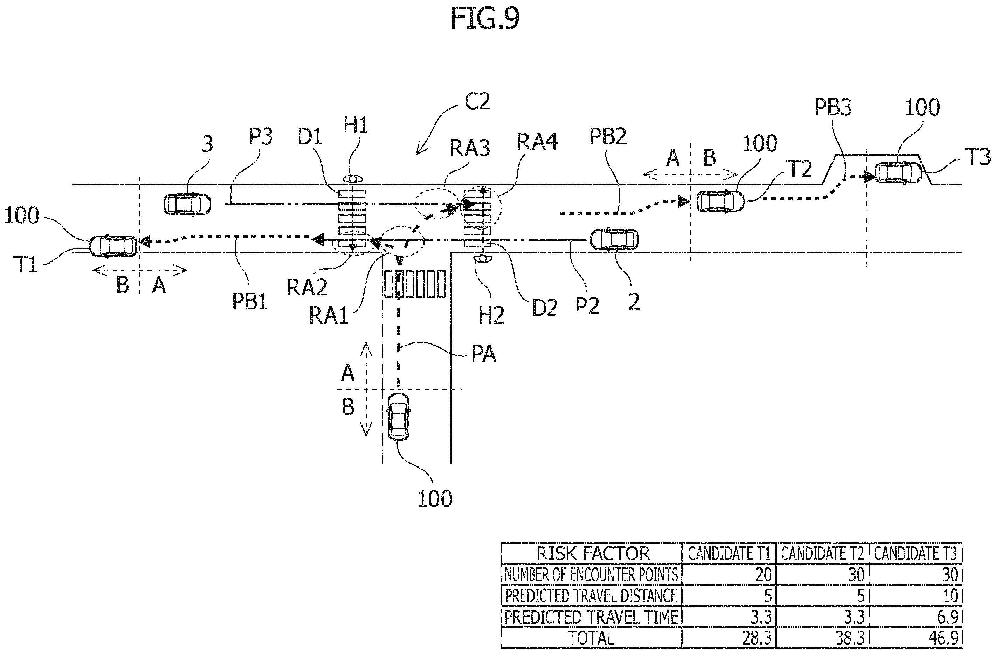

Figure 9 will be referenced to describe the selection of the target stopping location S for an intersection C2 which is a T-junction with no traffic signal. In the example illustrated in Figure 9, the vehicle 100 is present in front of the intersection C2, and pedestrian crossings are provided on the road ahead and the intersecting road as seen from the vehicle 100. According to sensing information from the V2X unit 26 and/or the in-vehicle camera 212, the presence of a straight-through vehicle 2 on the right and a straight-through vehicle 3 on the left is detected around the intersection C2, and furthermore, the presence of a pedestrian H1 attempting to cross a pedestrian crossing D1 on the left-turn side and a pedestrian H2 attempting to cross a pedestrian crossing D2 on the right-turn side is detected. A target path PA planned by the automated operation device 10 of the vehicle 100 is a path PA that makes a left turn or a right turn at the intersection C2.

As illustrated in Figure 9, the RMF part 12 sets a target stopping location candidate T1 in a stoppable zone B on a path making a left turn at the intersection C2, sets a target stopping location candidate T2 in a stoppable zone B on a path making a right turn at the intersection C2, and sets a target stopping location candidate T3 in a parking space farther ahead of the target stopping location candidate T2.

For the target stopping location candidate T1, the number of encounter points are two, that is, an encounter point with the straight-through vehicle 2 on the right in a risk area RA1 and an encounter point with the pedestrian H1 on the left-turn side in a risk area RA2, and the points related to the number of encounter points are Rf1 = 20. Assuming that the predicted travel distance is 100 meters and the predicted travel time is 33 seconds from the current location of the vehicle 100 to the target stopping location candidate T1, the points related to the predicted travel distance are Rf2 = 5 and the points related to the predicted travel time are Rf3 = 3.3. In this case, the risk factor RF of the target stopping location candidate T1 is 28.3 (= Rf1 + Rf2 + Rf3).

For the target stopping location candidate T2, the number of encounter points are three, that is, an encounter point with the straight-through vehicle 2 on the right in the risk area RA1, an encounter point with the straight-through vehicle 3 on the left in a risk area RA3, and an encounter point with the pedestrian H2 on the right-turn side in a risk area RA4, and the points related to the number of encounter points are Rf1 = 30. Assuming that the predicted travel distance is 100 meters and the predicted travel time is 33 seconds from the current location of the vehicle 100 to the target stopping location candidate T2, the points related to the predicted travel distance are Rf2 = 5 and the points related to the predicted travel time are Rf3 = 3.3. In this case, the risk factor RF of the target stopping location candidate T2 is 38.3 (= Rf1 + Rf2 + Rf3).

For the target stopping location candidate T3, similarly to the target stopping location candidate T2, the number of encounter points are three, that is, the encounter point with the straight-through vehicle 2 on the right, the encounter point with the straight-through vehicle 3 on the left, and the encounter point with the pedestrian H2, and the points related to the number of encounter points is Rf1 = 30. Assuming that the predicted travel distance is 200 meters and the predicted travel time is 69 seconds from the current location of the vehicle 100 to the target stopping location candidate T3, the points related to the predicted travel distance are **Rf2** = 10 and the points related to the predicted travel time are Rf3 = 6.9. In this case, the risk factor RF of the target stopping location candidate T3 is 46.9 (= Rf1 + Rf2 + Rf3).

The RMF part 12 compares the risk factors RF calculated for each of the plurality of target stopping location candidates T1, T2, and T3, and selects the target stopping location candidate T1 on the left-turn path with the smallest risk factor RF as the target stopping location S.

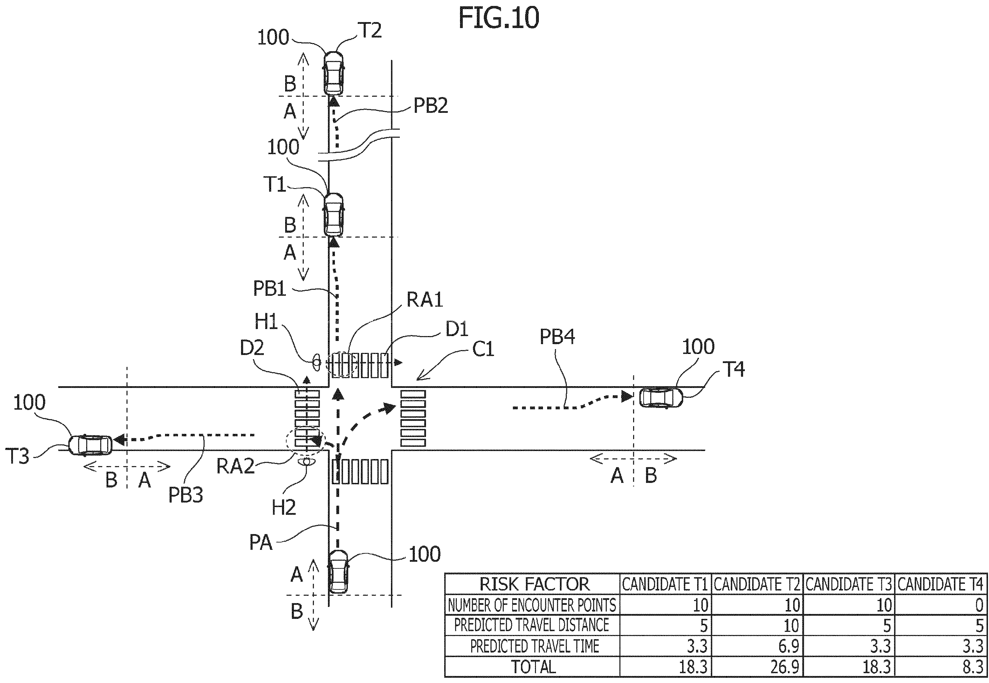

Next, reference will be made to Figure 10 to describe the selection of the target stopping location S for an intersection C1 which is a crossroads with no traffic signal. In the example illustrated in Figure 10, the vehicle 100 is present in front of the intersection C1, and pedestrian crossings are provided on the road going straight through the intersection C1 and the intersecting road as seen from the vehicle 100. According to sensing information from the V2X unit 26 and/or the in-vehicle camera 212, non-presence of other vehicles attempting to enter the intersection C1 is detected around the intersection C1, and furthermore, presence of a pedestrian H1 attempting to cross a pedestrian crossing D1 on the straight-through side and a pedestrian H2 attempting to cross a pedestrian crossing D2 on the left-turn side is detected. A target path PA planned by the automated operation device 10 of the vehicle 100 is a path PA that goes straight through, makes a left turn, or makes a right turn at the intersection C1.

As illustrated in Figure 10, the RMF part 12 sets a target stopping location candidate T1 in a stoppable zone B on a path going straight through the intersection C1 and sets a target stopping location candidate T2 in a stoppable zone B farther ahead of the target stopping location candidate T1. Also, a target stopping location candidate T3 is set in a stoppable zone B on a path making a left turn at the intersection C1 and a target stopping location candidate T4 is set in a stoppable zone B on a path making a right turn at the intersection C1.

For the target stopping location candidate T1, the number of encounter points is one, that is, an encounter point with the pedestrian H1 on the far side of the intersection C1 in a risk area RA1. According to sensing information from the V2X unit 26 and/or the in-vehicle camera 212, non-presence of other vehicles attempting to enter the intersection C1 is detected around the intersection C1, and therefore there are zero encounter points with other vehicles. Consequently, the points related to the number of encounter points are Rf1 = 10. Assuming that the predicted travel distance is 100 meters and the predicted travel time is 33 seconds from the current location of the vehicle 100 to the target stopping location candidate T1, the points related to the predicted travel distance are Rf2 = 5 and the points related to the predicted travel time are Rf3 = 3.3. In this case, the risk factor RF of the target stopping location candidate T1 is 18.3 (= Rf1 + Rf2 + Rf3).

For the target stopping location candidate T2, similarly to the target stopping location candidate T1, the number of encounter points is one, that is, an encounter point with the pedestrian H1 on the far side of the intersection C1 in the risk area RA1. Consequently, the points related to the number of encounter points are Rf1 = 10. Assuming that the predicted travel distance is 200 meters and the predicted travel time is 69 seconds from the current location of the vehicle 100 to the target stopping location candidate T2, the points related to the predicted travel distance are Rf2 = 10 and the points related to the predicted travel time are Rf3 = 6.9. In this case, the risk factor RF of the target stopping location candidate T2 is 26.9 (= Rf1 + Rf2 + Rf3).

For the target stopping location candidate T3, the number of encounter points is one, that is, an encounter point with the pedestrian H2 on the left-turn side in a risk area RA2, and the points related to the number of encounter points are Rf1 = 10. Assuming that the predicted travel distance is 100 meters and the predicted travel time is 33 seconds from the current location of the vehicle 100 to the target stopping location candidate T3, the points related to the predicted travel distance are Rf2 = 5 and the points related to the predicted travel time are Rf3 = 3.3. In this case, the risk factor RF of the target stopping location candidate T1 is 18.3 (= Rf1 + Rf2 + Rf3).

For the target stopping location candidate T4, if sensing information from the V2X unit 26 and/or the in-vehicle camera 212 is not accounted for, the maximum number of encounter points are five places. Specifically, as described above with reference to Figure 4(a), there may be present an encounter point with the straight-through vehicle 2 on the right in the risk area RA1, an encounter point with the straight-through vehicle 3 on the left in the risk area RA2, an encounter point with the oncoming straight-through vehicle 4 in the risk area RA3, an encounter point with the pedestrian H1 crossing the pedestrian crossing D1 in the risk area RA4, and an encounter point with the pedestrian H2 crossing the pedestrian crossing D2 in the risk area RA5.

However, in the example illustrated in Figure 10, according to sensing information from the V2X unit 26 and/or the in-vehicle camera 212, non-presence of other traffic participants is detected in the right-turn direction, and therefore there are zero encounter points. Consequently, the points related to the number of encounter points are calculated to be Rf1 = 0.

Assuming that the predicted travel distance is 100 meters and the predicted travel time is 33 seconds from the current location of the vehicle 100 to the target stopping location candidate T4, the points related to the predicted travel distance are Rf2 = 5 and the points related to the predicted travel time are Rf3 = 3.3. In this case, the risk factor RF of the target stopping location candidate T4 is 8.3 (= Rf1 + Rf2 + Rf3).

The RMF part 12 compares the risk factors RF calculated for each of the plurality of target stopping location candidates T1 to T4 and selects the target stopping location candidate T4 on the right-turn path with the smallest risk factor RF as the target stopping location S.

### RMF activation flow during automated driving

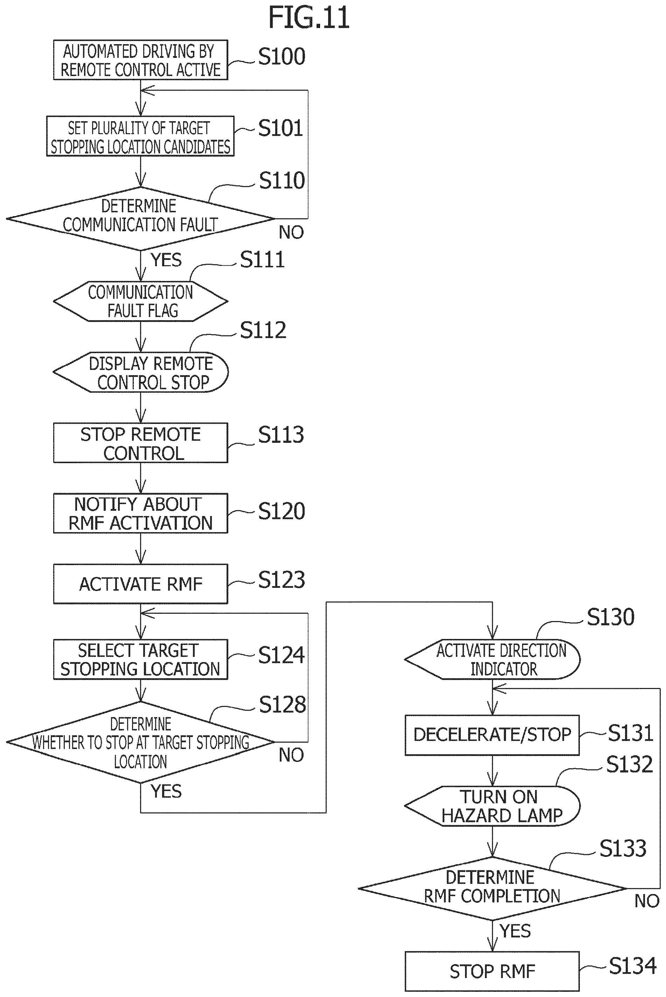

Next, the flow of RMF activation in conditions under which remote monitoring and control during automated driving has become difficult will be described. Figure 11 illustrates a flowchart explaining the flow of RMF activation according to the present embodiment.

### (1) Automated driving by remote monitoring and control activation (step S100)

Automated driving by the automated operation device 10 is performed according to a departure command from the operator of the remote-control base station 25R. The automated operation device 10 performs driving control of the vehicle 100 in accordance with a generated target path and a target vehicle speed.

### (2) Setting of plurality of target stopping location candidates (step S101)

The RMF part 12 performs a search for target stopping location candidates on the basis of vehicle location information from the positioning means 24 and map information in the map information database 23, and sets a plurality of target stopping location candidates partway along the global path to the destination in preparation for RMF activation. During automated driving, the RMF part 12 sets a plurality of target stopping location candidates continuously (for example, at prescribed intervals) and not only in the vicinity of an intersection. The plurality of target stopping location candidates are updated continuously so that the most recent target stopping location candidates based on the current location of the vehicle 100 are set.

### (3) Communication fault determination (step S110)

While the automated operation device 10 by remote monitoring and control is active, the RMF part 12 continuously (for example, at prescribed intervals) determines whether or not communication with the remote-control base station 25R via the communicator 25 is being performed normally and the continuation of automated driving is possible. If conditions are determined in which the continuation of remote monitoring and control of automated driving by the automated operation device 10 has become difficult due to a communication fault, such as a malfunction in the communicator 25 or an interruption in communication with the remote-control base station 25R, the flow proceeds to step S111 for activating the RMF. On the other hand, in the case in which a communication fault has not occurred and the continuation of remote monitoring and control is possible, the flow returns to step S101 and continues automated driving.

### (4) Stopping of remote monitoring and control (steps S111 to S113)

When it is determined that the continuation of remote monitoring and control has become difficult, a communication fault occurrence flag is raised (step S111), and at the same time, the notification part 17 notifies the inside and outside of the vehicle about the stopping of the activation (automated driving) of the automated operation device 10 by remote monitoring and control (step S112), and the activation of the automated operation device 10 by remote monitoring and control is stopped.

### (5) RMF activation notification (step S120)

The passengers or occupants of the vehicle 100 are notified by the notification part 17 that the RMF is to be activated because of conditions in which the continuation of remote monitoring and control has become difficult. The outside of the vehicle may also be notified by the notification part 17.

### (6) RMF activation (step S123)

The activation of the RMF for safely stopping the vehicle 100 inside a target stopping area is started. The RMF is a function causing the vehicle 100 to drive autonomously so as to decelerate and stop at a target stopping location S in accordance with a target path for RMF activation.

### (7) Target stopping location selection (step S124)

A target stopping location S is selected from among the plurality of target stopping location candidates by taking account of sensing information from the V2X unit 26 and/or the in-vehicle camera 212. The RMF part 12 considers whether other traffic participants are actually present to calculate the risk factor RF as described above for each of the plurality of target stopping location candidates set in step S101, and selects the target stopping location candidate with the lowest risk factor RF as the target stopping location S. The path generating part 13 generates a target path for RMF activation to the selected target stopping location S on the basis of vehicle location information, map information, lane marking positions of the neighboring lanes, the positions and speeds of other vehicles, the state of movement of the vehicle, and the like acquired by the environmental condition estimating part 11.

### (8) Determination of whether to stop at target stopping location S (step S128)

The RMF part 12 detects the presence or absence of an obstacle around the target stopping location S on the basis of obstacle information around the target stopping location S provided from the external sensor 21 and/or the V2X unit 26 through the environmental condition estimating part 11, and determines whether the vehicle can stop at the target stopping location S. In the case in which there is no obstacle around the target stopping location S, the target stopping location is determined to be accessible for stopping and the flow proceeds to step S130.

On the other hand, for example, in the case in which another vehicle is present at the target stopping location S or construction is underway near the target stopping location S, it is determined that the vehicle 100 cannot stop at the target stopping location S due to an obstacle around the target stopping location S. In this case, the flow returns to step S124 to select a new target stopping location S.

Furthermore, in the case in which an obstacle is present on the path, such as due to congestion, waiting at a railroad crossing, or road construction on the path to the target stopping location S, the time required to reach the target stopping location S is inferred to increase. In such cases, switching to a target stopping location S on a different path makes it possible to reach and stop at the target stopping location S rapidly. Consequently, information about not only obstacles around the target stopping location S but also obstacles on the path to the target stopping location S is acquired by the external sensor 21 and/or the V2X unit 26 to determine whether to stop at the target stopping location S. For example, stopping at the target stopping location S can be determined to be not possible in the case in which the predicted travel time to the target stopping location S increases by a prescribed ratio or greater due to an obstacle (such as congestion, waiting at a railroad crossing, or road construction, for example) on the path to the target stopping location S. In this case, the flow returns to step S124 to select a new target stopping location S on a different path.

### (9) Deceleration and stopping by RMF (steps S130 to S132)

The automated operation device 10 activates a direction indicator (not illustrated) in the direction of the target stopping location S (step S130). The vehicle control part 14 performs speed control and steering control to drive the vehicle 100 so as to decelerate in accordance with the target path for RMF activation, and to stop at the target stopping location S (step S131). The automated operation device 10 causes hazard lamps (not illustrated) to blink (step S132).

### (10) RMF completion determination (steps S133 and S134)

The RMF part 12 matches the location at which the vehicle 100 has stopped with the target stopping location S on the basis of vehicle location information and map information, and determines whether the two are in agreement. If they are not in agreement, the flow returns to step S131 to drive to the target stopping location S. In the case in which the stopped location of the vehicle 100 and the target stopping location S are in agreement, RMF completion is determined, and the flow proceeds to step S134 to terminate the RMF. With this, the sequence of RMF processes ends.

In the driving control apparatus of the vehicle 100 according to the embodiment described above, the following operational effects can be achieved.

The driving control apparatus of the vehicle 100 provided with the automated operation device 10 for executing automated driving by remote monitoring and control has a risk mitigation function (RMF) that executes risk mitigation control for stopping the vehicle at a target stopping location in the case of conditions in which the continuation of remote monitoring and control has become difficult. The automated operation device 10 is configured to execute a search for target stopping location candidates on the basis of location information about the vehicle 100 and map information during automated driving in preparation for the RMF activation, and in the case in which the RMF is activated in the vicinity of an intersection, to select, as the target stopping location, the target stopping location candidate with the least number of encounter points between the vehicle 100 and pedestrians at the intersection from among a plurality of target stopping location candidates including a target stopping location candidate located on a path different from the target path PA of automated driving, on the basis of detection information about pedestrians at the intersection acquired by the V2X communication 26, 26R and/or the in-vehicle camera 212.

Since the search for a plurality of target stopping location candidates is executed in advance during automated driving, when the activation of the RMF is started, the target stopping location S can be selected rapidly. In the case in which the RMF is activated in the vicinity of an intersection, the presence or absence of pedestrians near the intersection can be ascertained in real time on the basis of sensing information acquired by the V2X communication 26, 26R in cities and urban areas, and sensing information acquired by the in-vehicle camera 212 at suburban intersections or the like with good visibility, so as to be reflected in the number of encounter points. With this, the target stopping location candidate with the least number of encounter points with pedestrians can be selected as the target stopping location S, and the risk of inducing a disturbance in traffic flow or contact or collision with other traffic participants can be minimized.

In the case in which there are a plurality of target stopping location candidates with the least number of encounter points with pedestrians, a target stopping location candidate from among them with the least number of encounter points at which the vehicle is predicted to encounter with a traffic participant other than the pedestrians until the vehicle 100 reaches the target stopping location candidate from the current location is configured to be selected as the target stopping location. The target stopping location S can be determined according to sensing information acquired by the V2X communication 26, 26R, taking into consideration encounters with other vehicles from a side road or fork existing on the way to reaching the target stopping location candidate, encounters with pedestrian crossings at locations that cannot be confirmed with the in-vehicle camera 212, and the like, for example.

Pedestrians detected by the V2X communication 26, 26R and/or the in-vehicle camera 212 are approaching the intersection, waiting at the intersection, or crossing a pedestrian crossing of the intersection. By not counting pedestrians going away from the intersection in the number of encounter points, the number of encounter points at which there is a possibility of encountering a pedestrian can be determined accurately.

In addition to the presence or absence of pedestrians at the intersection, information about other vehicles approaching the intersection is acquired by the V2X communication 26, 26R and/or the in-vehicle camera 212, and on the basis of the detection information about pedestrians and the information about other vehicles, the target stopping location candidate with the least number of encounter points between the vehicle 100 and pedestrians and other vehicles and at which the vehicle 100 can stop is configured to be selected from among the plurality of target stopping location candidates as the target stopping location S. By acquiring in real time information about not only pedestrians in the vicinity of the intersection but also other vehicles approaching the intersection, risk of inducing a disturbance in the traffic flow or contact or collision with other traffic participants can be suppressed further.

After the target stopping location is selected, surrounding information about the target stopping location S continues to be acquired by the V2X communication 26, 26R and/or the in-vehicle camera 212, and in the case in which an obstacle being present on the path to the target stopping location S is detected, a target stopping location candidate located on a different path is configured to be selected as a new target stopping location S. In the case in which an obstacle is present on the path, such as congestion, waiting at a railroad crossing on the path to the target stopping location S or the presence of another vehicle at the target stopping location, the time required to reach the target stopping location S is inferred to increase. In such cases, switching to a target stopping location S on a different path makes it possible to reach and stop at the target stopping location S rapidly.

A no-stop area A to be excluded from the search for target stopping location candidates is set at the intersection and near the intersection, and therefore the risk of inducing contact or collision with other traffic participants can be reduced.

When the RMF is activated, in the case in which the number of encounter points between the vehicle 100 and other traffic participants is the least until the vehicle 100 reaches target stopping location candidates from the current location, (i) the target stopping location candidate with the shortest predicted travel time from the current location of the vehicle 100 to the target stopping location candidate is selected as the target stopping location S, and (ii) in the case in which there are a plurality of target stopping location candidates with the shortest predicted travel time, the target stopping location candidate with the shortest predicted travel distance from the current location of the vehicle 100 to the target stopping location candidate is selected as the target stopping location S. An appropriate target stopping location can be determined from points of view such as reducing encounter points with other traffic participants on the way to the target stopping location and reducing the travel time or travel distance to the target stopping location.

When the RMF is activated, in the case in which the number of encounter points between the vehicle 100 and other traffic participants including pedestrians, the predicted travel time from the current location of the vehicle 100 to the target stopping location candidate, and the predicted travel distance from the current location of the vehicle 100 to the target stopping location candidate are all the same, the target stopping location S is selected such that the direction of travel to the target stopping location candidate is preferentially in the order of the direction going straight through the intersection, the direction in which the vehicle 100 turns at the intersection without cutting across the oncoming lane, and the direction in which the vehicle 100 cuts across the oncoming lane at the intersection. **In** the case in which the target stopping location S is set in the straight-through direction, the presence or absence of an obstacle around the target stopping location S can be detected rapidly by the external sensor 21 to determine whether or not stopping is possible, and therefore a target stopping location candidate in the straight-through direction is prioritized to be selected. With regard to the direction (for example, the left-turn direction) in which the vehicle 100 turns at the intersection without cutting across the oncoming lane and the direction (for example, the right-turn direction) in which the vehicle 100 turns at the intersection by cutting across the oncoming lane, the left-turn direction has no encounter point with the oncoming straight-through vehicle 4 and is considered to be of lower risk than the right-turn direction.

The risk factor RF is calculated as the total of the points Rf1 related to the number of encounter points between the vehicle 100 and other traffic participants at the intersection and near the intersection, the points Rf3 related to the predicted travel time from the current location of the vehicle 100 to the target stopping location candidate, and the points Rf2 related to the predicted travel distance from the current location of the vehicle 100 to the target stopping location candidate. With regard to the number of encounter points, the possibility of contact or collision is lower with a fewer number of encounter points at which there is a possibility of encountering other traffic participants. Regarding the predicted travel time, the shorter the movement time to the target stopping location candidate is, the more travel can be shortened in conditions under which the continuation of remote monitoring and control is difficult. Regarding the predicted travel distance, the shorter the movement distance to the target stopping location candidate is, the more travel can be shortened in conditions under which the continuation of remote monitoring and control is difficult. Consequently, an appropriate target stopping location can be determined from points of view such as reducing encounter points with other traffic participants when passing through an intersection and reducing the travel time or travel distance to the target stopping location.

The risk factor RF is calculated by applying a weighting such that the weights increase in the order of the points Rf1 related to the number of encounter points, the points Rf3 related to the predicted travel time, and the points Rf2 related to the predicted travel distance. For example, cases are anticipated in which, despite the distance being short, the required time to the target stopping location is lengthy due to external influences such as traffic restrictions by road shoulder construction, and therefore, the weighting of the predicted travel time is greater than the predicted travel distance.

In the case in which the risk factors RF of a plurality of target stopping location candidates each have the same value, the target stopping location S is selected such that the direction of travel to the target stopping location candidate is preferentially in the order of the direction going straight through the intersection, the direction in which the vehicle 100 turns at the intersection without cutting across the oncoming lane, and the direction in which the vehicle 100 turns at the intersection by cutting across the oncoming lane. In the case in which the target stopping location S is set in the straight-through direction, the presence or absence of an obstacle around the target stopping location S can be detected rapidly by the external sensor 21 to determine whether or not the target stopping location is accessible for stopping, and therefore, a target stopping location candidate in the straight-through direction is selected preferentially. With regard to the direction (for example, the left-turn direction) in which the vehicle 100 turns at the intersection without cutting across the oncoming lane and the direction (for example, the right-turn direction) in which the vehicle 100 turns at the intersection by cutting across the oncoming lane, the left-turn direction has no encounter point with the oncoming straight-through vehicle 4 and is considered to be of lower risk than the right-turn direction.

At the intersection and near the intersection, a no-stop area A to be excluded from the search for target stopping location candidates is set. Since an area of high risk near the intersection is designed to be set as a no-stop area A and the target stopping location S is arranged not to be set in the no-stop area A, encounter points with other traffic participants can be cleared at least partially, and the risk of inducing contact/collision with other traffic participants can be reduced.

### Modifications

(1) In the embodiment described above, a plurality of target stopping location candidates are searched for continuously in preparation for the RMF activation, and the target stopping location S is selected from among the plurality of target stopping location candidates. Situations in which there is an obstacle around the target stopping location S so that the target stopping location is not accessible for stopping may be anticipated, and therefore a greater number of target stopping location candidates is preferable. From the point of view of the processing load on the RMF part 12, the number of target stopping location candidates may be arranged to be at least two places, and in the case in which the selected target stopping location S is not accessible for stopping, target stopping location candidates located on the same path may be arranged to be added.
(2) In the embodiment described above, the determination of the target stopping location S in the case in which the RMF is activated in the vicinity of an intersection is described. However, the determination method for the target stopping location S according to the embodiment described above is not limited to the vicinity of an intersection and can also be applied to conditions that necessitate lane changing or travel path changing by the activation of the RMF, such as roadways with many lanes.
(3) In the embodiment described above, the risk factor RF is calculated as the total of the points Rf1 related to the number of encounter points, the points Rf2 related to the predicted travel distance, and the points Rf3 related to the predicted travel time. However, the risk factor RF is not limited thereto and may also be calculated using at least one of the points Rf1 related to the number of encounter points, the points Rf2 related to the predicted travel distance, and the points Rf3 related to the predicted travel time. Moreover, the risk factor RF may also be arranged to be calculated on the basis of a factor other than the number of encounter points, the predicted travel distance, and the predicted travel time.
(4) In the embodiment described above, left-hand traffic is described as an example of the traffic rules, but the present embodiment is also applicable to the case of right-hand traffic. In the case of right-hand traffic, the direction of making a right turn at an intersection is the direction of turning without cutting across the oncoming lane, and the direction of making a left turn at an intersection is the direction of turning by cutting across the oncoming lane.
(5) In the embodiment described above, information related to the presence or absence of pedestrians around an intersection is configured to be acquired by utilizing sensing information from the V2X communication 26, 26R and the in-vehicle camera 212. In this case, it may be configured such that the number of pedestrians is also detected in addition to the presence or absence of pedestrians, and in the case in which there are pedestrians, the points Rf1 related to the number of encounter points is calculated on the basis of the number of pedestrians. For example, the points Rf1 related to the number of encounter points can be set to a larger value with a greater number of pedestrians.
(6) In the embodiment described above, the driving control system of the vehicle 100 is configured to utilize sensing information from both the V2X communication 26, 26R and the in-vehicle camera 212. However, it is not limited thereto and may also be configured to utilize sensing information from at least one of the V2X communication 26, 26R and the in-vehicle camera 212.

Although several embodiments of the present invention have been described above, it is noted that the present invention is not limited to the above embodiments, and various further modifications and alterations are possible within the scope of the present invention.

### [Reference Signs List]

- 100: Vehicle
- 10: Automated operation device
- 11: Environmental condition estimating part
- 12: RMF part
- 13: Path generating part
- 14: Vehicle control part
- 15: ACC controller
- 16: Automated steering controller
- 17: Notification part
- 21: External sensor
- 22: Internal sensor
- 23: Map information database
- 24: Positioning means (GNSS)
- 25: Communicator
- 26: V2X unit
- 31: EPS controller
- 32: Engine controller
- 33: ESP/ABS controller
- 34: Manual steering (wheel)
- 35: Manual control (accelerator pedal)
- 36: Manual control (brake pedal)

## Claims

1. A driving control apparatus for a vehicle (100) provided with an automated operation device (10) for executing automated driving by remote monitoring and control, having
a risk mitigation function (RMF) that executes risk mitigation control for stopping the vehicle (100) at a target stopping location (S) in a case of communication fault with a remote-control base station for remote monitoring and control, wherein
the automated operation device (10) is configured:
to generate a target path of the automated driving from a place of departure to a destination input from the remote-control base station on the basis of location information about the vehicle (1) and map information;
to execute a search for target stopping location candidates (T1, T2, T3, T4) on the basis of location information about the vehicle (100) and map information during the automated driving in preparation for RMF activation; and
in a case in which the RMF is activated in a predetermined area in front of an intersection in which the vehicle (100) would come to a stop inside a no-stop area of the intersection due to RMF activation, to select, as the target stopping location (S), a target stopping location candidate with the least number of encounter points between the vehicle (100) and pedestrians (H1, H2, H3, H4) at the intersection from among a plurality of target stopping location candidates (T1, T2, T3, T4) including a target stopping location candidate located on a path different from a target path of the automated driving, on the basis of detection information about pedestrians (H1, H2, H3, H4) at the intersection acquired by V2X communication (26, 26R) and/or an in-vehicle camera (212).

2. The driving control apparatus for a vehicle (100) according to claim 1, wherein
in a case in which there are a plurality of the target stopping location candidates with the least number of encounter points with pedestrians (H1, H2, H3, H4), the driving control apparatus is configured to select, as the target stopping location (S), a target stopping location candidate from among them with the least number of encounter points at which an encounter is predicted with traffic participants other than the pedestrians (H1, H2, H3, H4) until the vehicle (100) reaches the target stopping location candidate (T1, T2, T3, T4) from a current location.

3. The driving control apparatus for a vehicle (100) according to claim 1 or 2, wherein
the pedestrians (H1, H2, H3, H4) detected by the V2X communication (26, 26R) and/or the in-vehicle camera (212) are approaching the intersection, waiting at the intersection, or crossing a pedestrian crossing of the intersection.

4. The driving control apparatus for a vehicle (100) according to any one of claims 1 to 3, wherein
the driving control apparatus is configured:
to acquire, by the V2X communication (26, 26R) and/or the in-vehicle camera (212), information about other vehicles (2, 3, 4) approaching the intersection in addition to presence or absence of the pedestrians (H1, H2, H3, H4) at the intersection; and
to select, as the target stopping location (S), a target stopping location candidate with the least number of encounter points between the vehicle (100) and the pedestrians (H1, H2, H3, H4) and the other vehicles (2, 3, 4) and at which the vehicle (100) can stop from among the plurality of target stopping location candidates (T1, T2, T3, T4), on the basis of the detection information about the pedestrians (H1, H2, H3, H4) and the information about the other vehicles (2, 3, 4).

5. The driving control apparatus for a vehicle (100) according to any one of claims 1 to 4, wherein
the driving control apparatus is configured:
to continue to acquire, by the V2X communication (26, 26R) and/or the in-vehicle camera (212), surrounding information about the target stopping location (S) after the target stopping location (S) is selected; and
in a case in which an obstacle being present on a path to the target stopping location (S) is detected, to select a target stopping location candidate located on a different path as a new target stopping location (S).

6. The driving control apparatus for a vehicle (100) according to any one of claims 1 to 5, wherein
at the intersection, a no-stop area (A) to be excluded from the search for target stopping location candidates (T1, T2, T3, T4) is set.

7. The driving control apparatus for a vehicle (100) according to any one of claims 1 to 6, wherein
when the RMF is activated, in a case in which the number of encounter points between the vehicle (100) and other traffic participants is the least until the vehicle (100) reaches the target stopping location candidates (T1, T2, T3, T4) from the current location, the driving control apparatus is configured:
(i) to select, as the target stopping location (S), a target stopping location candidate with the shortest predicted travel time from the current location of the vehicle (100) to the target stopping location candidate; and
(ii) in a case in which there are a plurality of target stopping location candidates with the shortest predicted travel time, to select, as the target stopping location (S), a target stopping location candidate with the shortest predicted travel distance from the current location of the vehicle (100) to the target stopping location candidate.

8. The driving control apparatus for a vehicle (100) according to any one of claims 1 to 7, wherein
when the RMF is activated, in a case in which the number of encounter points between the vehicle (100) and other traffic participants including pedestrians (H1, H2, H3, H4), the predicted travel time from the current location of the vehicle (100) to the target stopping location candidates (T1, T2, T3, T4), and the predicted travel distance from the current location of the vehicle (100) to the target stopping location candidates (T1, T2, T3, T4) are all the same, a target stopping location candidate is selected as the target stopping location (S) such that a direction of travel to the target stopping location candidate is preferentially in the order of a direction going straight through the intersection, a direction in which the vehicle turns at the intersection without cutting across an oncoming lane, and a direction in which the vehicle cuts across the oncoming lane at the intersection.

## Patentansprüche

1. Antriebssteuerungsvorrichtung für ein Fahrzeug (100), das mit einer automatisierten Bedienungseinrichtung (10) zum Ausführen des automatisierten Fahrens durch Fernüberwachung und -steuerung ausgestattet ist, mit
einer Risikominderungsfunktion (RMF), die eine Risikominderungssteuerung zum Anhalten des Fahrzeugs (100) an einem Zielanhalteort (S) in einem Fall eines Kommunikationsfehlers mit einer Fernsteuerungsbasisstation für Fernüberwachung und -steuerung ausführt, wobei
die automatisierte Bedienungseinrichtung (10) konfiguriert ist, um:
einen Zielpfad des automatisierten Fahrens von einem Abfahrtsort zu einem von der ferngesteuerten Basisstation zugewiesenen Ziel auf der Grundlage von Positionsinformationen über das Fahrzeug (1) und Karteninformationen zu erzeugen;
während des automatisierten Fahrens in Vorbereitung auf die RMF-Aktivierung eine Suche nach einer Vielzahl von Zielanhalteortkandidaten (T1, T2, T3, T4) auf der Grundlage von Ortsinformationen über das Fahrzeug (100) und Karteninformationen durchzuführen; und dass
in einem Fall, in dem die RMF in einem vorbestimmten Bereich vor einer Kreuzung aktiviert wird, in dem das Fahrzeug (100) aufgrund der RMF-Aktivierung innerhalb eines Halteverbotsbereichs der Kreuzung zum Stillstand kommen würde, als Zielanhalteort (S) einen Zielanhalteortkandidaten mit der mindestens geringsten Anzahl von Begegnungspunkten zwischen dem Fahrzeug (100) und Fußgängern (H1, H2, H3, H4) an der Kreuzung aus einer Vielzahl von Zielanhalteortkandidaten (T1, T2, T3, T4) einschließlich eines Zielanhalteortkandidaten, der sich auf einem Pfad befindet, der sich von einem Zielpfad des automatisierten Fahrens unterscheidet, auf der Grundlage von Erkennungsinformationen über Fußgänger (H1, H2, H3, H4) an der Kreuzung, die durch V2X-Kommunikation (26, 26R) und/oder eine Fahrzeugkamera (212) erfasst wurden, auszuwählen.

2. Antriebssteuerungsvorrichtung für ein Fahrzeug (100) nach Anspruch 1, wobei
in einem Fall, in dem es eine Vielzahl von Zielanhalteortkandidaten mit der mindestens geringsten Anzahl von Begegnungspunkten mit Fußgängern (H1, H2, H3, H4) gibt, die Antriebssteuerungsvorrichtung konfiguriert ist, um einen Zielanhalteortkandidaten mit der mindestens geringsten Anzahl von Begegnungspunkten mit anderen Verkehrsteilnehmern als den Fußgängern (H1, H2, H3, H4) als Zielanhalteort (S) auszuwählen, bis das Fahrzeug (100) den Zielanhalteortkandidaten (T1, T2, T3, T4) von einer aktuellen Position aus erreicht.

3. Antriebssteuerungsvorrichtung für ein Fahrzeug (100) nach Anspruch 1 oder 2, wobei
die von der V2X-Kommunikation (26, 26R) und/oder der bordeigenen Kamera (212) erkannten Fußgänger (H1, H2, H3, H4) sich der Kreuzung nähern, an der Kreuzung warten oder einen Fußgängerüberweg an der Kreuzung überqueren.

4. Antriebssteuerungsvorrichtung für ein Fahrzeug (100) nach einem der Ansprüche 1 bis 3, wobei
die Antriebssteuerungsvorrichtung konfiguriert ist, um:
über die V2X-Kommunikation (26, 26R) und/oder die bordeigene Kamera (212) Informationen über andere Fahrzeuge (2, 3, 4) zu erfassen, die sich der Kreuzung nähern, zusätzlich zur Anwesenheit oder Abwesenheit von Fußgängern (H1, H2, H3, H4) an der Kreuzung; und
als Zielanhalteort (S) einen Zielanhalteortkandidaten mit der mindestens geringsten Anzahl von Begegnungspunkten zwischen dem Fahrzeug (100) und den Fußgängern (H1, H2, H3, H4) und den anderen Fahrzeugen (2, 3, 4) und an dem das Fahrzeug (100) aus der Vielzahl der Zielanhalteortkandidaten (T1, T2, T3, T4) anhalten kann, auf der Grundlage der Erkennungsinformationen über die Fußgänger (H1, H2, H3, H4) und der Informationen über die anderen Fahrzeuge (2, 3, 4) auszuwählen.

5. Antriebssteuerungsvorrichtung für ein Fahrzeug (100) nach einem der Ansprüche 1 bis 4, wobei
die Antriebssteuerungsvorrichtung konfiguriert ist, um:
über die V2X-Kommunikation (26, 26R) und/oder die bordeigene Kamera (212) weiterhin Umgebungsinformationen über den Zielanhalteort (S) zu erfassen, nachdem der Zielanhalteort (S) ausgewählt wurde; und
in einem Fall, in dem das Vorhandensein eines Hindernisses auf einem Pfad zum Zielanhalteort (S) erkannt wird, einen Zielanhalteortkandidaten, der auf einem anderen Pfad liegt, als neuen Zielanhalteort (S) auszuwählen.

6. Antriebssteuerungsvorrichtung für ein Fahrzeug (100) nach einem der Ansprüche 1 bis 5, wobei
an der Kreuzung ein Halteverbotsbereich (A) festgelegt wird, der von der Suche nach Zielanhalteort-Kandidaten (T1, T2, T3, T4) ausgeschlossen wird.

7. Antriebssteuerungsvorrichtung für ein Fahrzeug (100) nach einem der Ansprüche 1 bis 6, wobei
wenn die RMF aktiviert ist, in einem Fall, in dem die Anzahl der Begegnungspunkte zwischen dem Fahrzeug (100) und anderen Verkehrsteilnehmern mindestens so groß ist, bis das Fahrzeug (100) die Zielanhalteortkandidaten (T1, T2, T3, T4) von der aktuellen Position aus erreicht, die Antriebssteuerungsvorrichtung konfiguriert ist, um:
(i) als Zielanhalteort (S) einen Zielanhalteortkandidaten mit der kürzesten vorhergesagten Fahrzeit von der aktuellen Position des Fahrzeugs (100) zum Zielanhalteortkandidaten auszuwählen; und
(ii) in einem Fall, in dem es eine Vielzahl von Zielanhalteortkandidaten mit der kürzesten vorausgesagten Reisezeit gibt, als Zielanhalteort (S) einen Zielanhalteortkandidaten mit der kürzesten vorhergesagten Fahrdistanz von der aktuellen Position des Fahrzeugs (100) zum Zielanhalteortkandidaten auszuwählen.

8. Antriebssteuerungsvorrichtung für ein Fahrzeug (100) nach einem der Ansprüche 1 bis 7, wobei
wenn die RMF aktiviert ist, in einem Fall, in dem die Anzahl der Begegnungspunkte zwischen dem Fahrzeug (100) und anderen Verkehrsteilnehmern einschließlich Fußgängern (H1, H2, H3, H4), die vorhergesagte Fahrzeit von der aktuellen Position des Fahrzeugs (100) zu den Zielanhalteortkandidaten (T1, T2, T3, T4) und die vorhergesagte Distanz von der aktuellen Position des Fahrzeugs (100) zu den Zielanhalteortkandidaten (T1, T2, T3, T4) alle gleich sind, ein Zielanhalteortkandidat als Zielanhalteort (S) derart ausgewählt wird, dass eine Fahrtrichtung zu dem Zielanhalteortkandidaten vorzugsweise in der Reihenfolge einer Richtung, die geradeaus durch die Kreuzung führt, einer Richtung, in der das Fahrzeug an der Kreuzung abbiegt, ohne eine Gegenfahrbahn zu schneiden, und einer Richtung, in der das Fahrzeug an der Kreuzung die Gegenfahrbahn abschneidet, liegt.

## Revendications

1. Appareil de commande de conduite pour un véhicule (100) doté d'un dispositif de fonctionnement automatisé (10) pour exécuter une conduite automatisée par une surveillance et une commande à distance, présentant
une fonction d'atténuation des risques (RMF) qui exécute une commande d'atténuation des risques pour arrêter le véhicule (100) au niveau d'un emplacement d'arrêt cible (S) en cas de défaut de communication avec une station de base de commande à distance pour la surveillance et la commande à distance, dans lequel
le dispositif de fonctionnement automatisé (10) est configuré :
pour générer un trajet cible de la conduite automatisée d'un lieu de départ jusqu'à une destination saisie au niveau de la station de base de commande à distance sur la base d'informations d'emplacement concernant le véhicule (1) et d'informations cartographiques ;
pour exécuter une recherche de candidats d'emplacement d'arrêt cible (T1, T2, T3, T4) sur la base d'informations d'emplacement concernant le véhicule (100) et d'informations cartographiques pendant la conduite automatisée en préparation de l'activation de la RMF ; et
au cas où la RMF est activée dans une zone prédéterminée devant une intersection dans laquelle le véhicule (100) s'arrêterait à l'intérieur d'une zone d'arrêt interdit de l'intersection en raison de l'activation de la RMF, pour sélectionner, en tant qu'emplacement d'arrêt cible (S), un candidat d'emplacement d'arrêt cible présentant le moins de points de rencontre entre le véhicule (100) et des piétons (H1, H2, H3, H4) à l'intersection parmi une pluralité de candidats d'emplacement d'arrêt cible (T1, T2, T3, T4) y compris un candidat d'emplacement d'arrêt cible situé sur un trajet différent d'un trajet cible de la conduite automatisée, sur la base d'informations de détection concernant les piétons (H1, H2, H3, H4) à l'intersection acquises par une communication V2X (26, 26R) et/ou une caméra embarquée (212).

2. Appareil de commande de conduite pour un véhicule (100) selon la revendication 1, dans lequel
au cas où il existe une pluralité de candidats d'emplacement d'arrêt cible présentant le moins de points de rencontre avec les piétons (H1, H2, H3, H4), l'appareil de commande de conduite est configuré pour sélectionner, en tant qu'emplacement d'arrêt cible (S), un candidat d'emplacement d'arrêt cible parmi ceux-ci présentant le moins de points de rencontre au niveau duquel une rencontre est prévue avec des usagers de la route autres que les piétons (H1, H2, H3, H4) jusqu'à ce que le véhicule (100) atteigne le candidat d'emplacement d'arrêt cible (T1, T2, T3, T4) à partir d'un emplacement actuel.

3. Appareil de commande de conduite pour un véhicule (100) selon la revendication 1 ou 2, dans lequel
les piétons (H1, H2, H3, H4) détectés par la communication VAX (26, 26R) et/ou la caméra embarquée (212) s'approchent de l'intersection, attendent à l'intersection ou traversent un passage piéton de l'intersection.

4. Appareil de commande de conduite pour un véhicule (100) selon l'une quelconque des revendications 1 à 3, dans lequel l'appareil de commande de conduite est configuré :
pour acquérir, au moyen de la communication VAX (26, 26R) et/ou de la caméra embarquée (212), des informations concernant d'autres véhicules (2, 3, 4) s'approchant de l'intersection, ainsi que sur la présence ou l'absence des piétons (H1, H2, H3, H4) à l'intersection ; et
pour sélectionner, en tant qu'emplacement d'arrêt cible (S), un candidat d'emplacement d'arrêt cible présentant le moins de points de rencontre entre le véhicule (100) et les piétons (H1, H2, H3, H4) et les autres véhicules (2, 3, 4) et au niveau duquel le véhicule (100) peut s'arrêter parmi la pluralité de candidats d'emplacement d'arrêt cible (T1, T2, T3, T4), sur la base des informations de détection concernant les piétons (H1, H2, H3, H4) et des informations concernant les autres véhicules (2, 3, 4).

5. Appareil de commande de conduite pour un véhicule (100) selon l'une quelconque des revendications 1 à 4, dans lequel
l'appareil de commande de conduite est configuré :
pour continuer à acquérir, au moyen de la communication VAX (26, 26R) et/ou de la caméra embarquée (212), des informations environnantes concernant l'emplacement d'arrêt cible (S) après la sélection de l'emplacement d'arrêt cible (S) ; et
au cas où un obstacle présent sur le trajet menant à l'emplacement d'arrêt cible (S) est détecté, pour sélectionner un candidat d'emplacement d'arrêt cible situé sur un trajet différent en tant que nouvel emplacement d'arrêt cible (S).

6. Appareil de commande de conduite pour un véhicule (100) selon l'une quelconque des revendications 1 à 5, dans lequel
à l'intersection, une zone d'arrêt interdit (A) à exclure de la recherche des candidats d'emplacement d'arrêt cible (T1, T2, T3, T4) est définie.

7. Appareil de commande de conduite pour un véhicule (100) selon l'une quelconque des revendications 1 à 6, dans lequel
lorsque la RMF est activée, au cas où le nombre de points de rencontre entre le véhicule (100) et les autres usagers de la route est le plus faible jusqu'à ce que le véhicule (100) atteigne les candidats d'emplacement d'arrêt cible (T1, T2, T3, T4) depuis l'emplacement actuel, l'appareil de commande de conduite est configuré :
(i) pour sélectionner, en tant qu'emplacement d'arrêt cible (S), un candidat d'emplacement d'arrêt cible présentant le temps de trajet prévu le plus court depuis l'emplacement actuel du véhicule (100) jusqu'au candidat d'emplacement d'arrêt cible ; et
(ii) au cas où il existe une pluralité de candidats d'emplacement d'arrêt cible présentant le temps de trajet prévu le plus court, pour sélectionner, en tant qu'emplacement d'arrêt cible (S), un candidat d'emplacement d'arrêt cible présentant la distance de trajet prévu la plus courte depuis l'emplacement actuel du véhicule (100) jusqu'au candidat d'emplacement d'arrêt cible.

8. Appareil de commande de conduite pour un véhicule (100) selon l'une quelconque des revendications 1 à 7, dans lequel
lorsque la RMF est activée, au cas où le nombre de points de rencontre entre le véhicule (100) et les autres usagers de la route, y compris les piétons (H1, H2, H3, H4), le temps de trajet prévu depuis l'emplacement actuel du véhicule (100) jusqu'aux candidats d'emplacement d'arrêt cible (T1, T2, T3, T4) et la distance de trajet prévu depuis l'emplacement actuel du véhicule (100) jusqu'aux candidats d'emplacement d'arrêt cible (T1, T2, T3, T4) sont tous identiques, un candidat d'emplacement d'arrêt cible est sélectionné en tant qu'emplacement d'arrêt cible (S) de telle sorte que la direction de déplacement vers le candidat d'emplacement d'arrêt cible soit de préférence dans l'ordre suivant : une direction allant tout droit à travers l'intersection, une direction dans laquelle le véhicule tourne à l'intersection sans couper la voie de circulation opposée, et une direction dans laquelle le véhicule coupe la voie de circulation opposée à l'intersection.
